# EUROPEAN PATENT SPECIFICATION

(11) **EP 4 124 230 B1**
(45) Date of publication and mention of the grant of the patent: **30.09.2026**
(21) Application number: 22185954.9
(22) Date of filing: 20.07.2022
(51) Int. Cl.: A01D 34/78, A01D 34/67, A01D 34/82, A01D 34/69, A01D 34/90, A01D 34/695

(54) **MOBILE DEVICE FOR CUTTING GRASS HAVING AN ONBOARD ELECTRIC BATTERY**
MOBILES GERÄT ZUM RASENMÄHEN MIT INTEGRIERTER ELEKTRISCHER BATTERIE
DISPOSITIF MOBILE DE COUPE DE L'HERBE ÉQUIPÉ D'UNE BATTERIE ÉLECTRIQUE INTÉGRÉE

(30) Priority: 27.07.2021 IT 202100020078
(43) Date of publication of application: 01.02.2023
(73) Proprietor: Stiga S.p.A. in breve anche St. S.p.A., 31033 Castelfranco Veneto (TV) (IT)
(72) Inventor: GATTO, Carla, Trebaseleghe (PD) (IT); FIOR, Roberto, Castelfranco Veneto (TV) (IT); GALLINA, Michele, Asolo (TV) (IT); CAMERON, James, Treviso (IT)
(74) Representative: PGA S.p.A.

(56) References cited:
- EP-A1- 0 841 000
- EP-A1- 3 295 782
- US-A- 5 551 220
- US-A1- 2011 179 757
- US-A1- 2021 153 433

## Description

### Field of the Invention

The present invention relates to a mobile device for cutting grass comprising a body, a handlebar, at least one payload, an electric motor and at least one battery. Such a device can be of the hover mower type or of the walk behind mower type. Such a device can be advantageously employed for the maintenance of turfgrasses, for example of turfgrasses in private home gardens.

### Background art

In view of the ever-increasing attention to aspects of environmental sustainability, as well as regulatory provisions oriented precisely towards such environmental sustainability, there has been a sudden affirmation on the market of vehicles provided with electric motors powered by rechargeable on-board batteries.

The field of garden maintenance equipment, in particular devices for cutting grass, is also evolving significantly in the direction of increasing environmental sustainability, whereby there is a growing demand on the market for devices, whether manually driven or self driven, provided with electric motors (for propulsion and/or for the activation of loads such as cutting members) powered by rechargeable on-board batteries. Moreover, the power supply of a mobile device for cutting grass by means of a battery has obvious advantages over alternative power supply modes.

In fact, when compared to fuel, battery power supply allows to avoid the emission of exhaust gases which not only represent a source of environmental pollution, but are also obviously harmful to the health of the operator driving the device. Furthermore, in the case of battery power supply, the operator is exempted from having to carry out potentially risky operations, such as having to store and spill fuels, or highly flammable liquids.

If instead compared to power supply by cable, battery power supply is undoubtedly preferable, since it is considerably more comfortable as the operator is exempted from having to unwind and wind the cable with each maintenance intervention, the cable then often being an obstacle to the advancement of the device. Furthermore, the cable (unless extensions which make the maintenance interventions even more inconvenient for the operator are used) places an obvious limit, represented by its length, to the range of action of the device. This is a very significant drawback, in the case in which (as indeed frequently occurs) the plot of land on which the maintenance intervention must be performed is rather extensive or has a very irregular shape. Finally, the cable, dragging on the ground during the advancement of the device, undergoes a substantial accumulation of dirt on its surface (and also of pathogens), resulting in harm to the operator who must then come into contact with such a cable in order to unwind or wind it.

Patent application US2021/0112710A1 discloses a mobile hover mower type device which is manually driven (or provided with an impeller for generating an air flow intended to cause a floating effect such as to keep the mobile grass cutting device raised with respect to the ground and thus to allow the advancement thereof) comprising a rechargeable on-board battery. The device referred to in patent application US2021/0112710A1 includes a body on which the cutting element, the impeller, the electric motor for activating the cutting element and the impeller and the battery for powering the electric motor are installed. The configuration of a mobile grass cutting device described in patent application US2021/0112710A1, while being of interest in that it allows to obtain the aforementioned advantages of the battery power supply with respect to fuel supply and cable power supply, is not however free from technical drawbacks since the battery is arranged in a position in which it affects the heaviness of the device, impairs the floatation and manoeuvrability, constitutes an encumbrance which limits the field of visibility of the operator and is subject to the accumulation of dirt and dust.

The device Stiga Collector 543 AE Kit is also known, such a device being a manually driven lawnmower of the type with wheels, in particular provided with a pair of front wheels and a pair of rear wheels to allow a pushing advancement of the device. The device Stiga Collector 543 AE Kit is provided with a rechargeable on-board battery, installed inside the body of the device together with the electric motor powered by the battery and the cutting member activated by the electric motor. The mobile grass cutting device Stiga Collector 543 AE Kit is also of interest as it allows to obtain all the benefits of battery power supply, but it can also be improved in terms of weight distribution, overall dimensions and susceptibility to dirt and dust accumulation.

Document EP0841000A1 discloses a brush cutter comprising a gripping portion arranged at the end of the handlebar and a battery pack hooked to the gripping portion. Document US2011/0179757A1 discloses a hover mower type grass cutting device, the handlebar of which is formed by a single stick and comprises a grip in which a battery is inserted. Document EP3295782A1 discloses an electric brush cutter comprising, at the end of the handlebar, a casing which houses the control unit and the motor, the lower surface of the casing being provided with a support for a battery pack. Document US2021/0153433A1 discloses a brush cutter comprising a casing arranged at the end of the handlebar, a pair of batteries being removably associated with the casing. Document US5,551,220 discloses a grass cutting device comprising a frame and a handlebar applied to the frame, in which a battery and a solar cell panel are mounted to the handlebar, the battery being positioned adjacent to the gripping portion of the handlebar and the solar cell panel being positioned between the battery and the frame.

### Objects of the invention

In light of the prior art, it is an object of the present disclosure to overcome the drawbacks lamented in relation to the mobile grass cutting device described in patent application US2021/0112710A1 and in relation to the mobile grass cutting device Stiga Collector 543 AE Kit.

It is a further object of the present disclosure to provide a manually driven mobile grass cutting device with on-board battery which is optimal from the point of view of environmental sustainability, both when articulated according to the hover mower configuration, and when articulated according to the walk behind mower configuration.

It is a further object of the present disclosure to provide a manually driven mobile grass cutting device with on-board battery which is characterized by optimal ergonomics, especially with regard to the operations of removing the battery so as to perform the recharging thereof and putting the battery back in position once the recharging is completed.

It is a further object of the present disclosure to provide a manually driven mobile grass cutting device with on-board battery which is characterized by an optimal weight distribution, from which a greater handling of the device is obtained, also with improved floating capacity in the event of a hover mower configuration.

It is a further object of the present disclosure to provide a manually driven mobile grass cutting device with on-board battery which is characterized by an optimal energy efficiency, having particularly low consumption and consequently a particularly long autonomy time.

It is a further object of the present disclosure to provide a manually driven mobile grass cutting device with on-board battery which allows the operator to have a wide field of view while driving the device, the land immediately in front of the device being in particular clearly visible. Optimal ergonomics, especially with regard to the removal of the battery in order to perform the recharging thereof and putting the battery back once the recharging is completed.

It is a further object of the present disclosure to provide a manually driven mobile grass cutting device with on-board battery, in which the device is optimally protected from dirt and dust and in which the on-board battery is not exposed to rain.

It is a further object of the present disclosure to provide a manually driven mobile grass cutting device with on-board battery, having a particularly compact and aesthetically pleasing shape.

It is a further object of the present disclosure to provide a manually driven mobile grass cutting device with on-board battery, which is competitive from a production time and cost point of view.

It is further object of the present disclosure to provide a manually driven mobile grass cutting device with on-board battery, for which any technical assistance interventions are particularly easy.

### Aspects of the invention

The stated objects are effectively achieved by a mobile device in accordance with claim 1.

Further preferred embodiments are defined by the dependent claims.

### Presentation of the figures

The above aspects will become even clearer by means of, in addition to the following detailed description, also the figures accompanying such a detailed description, in which:

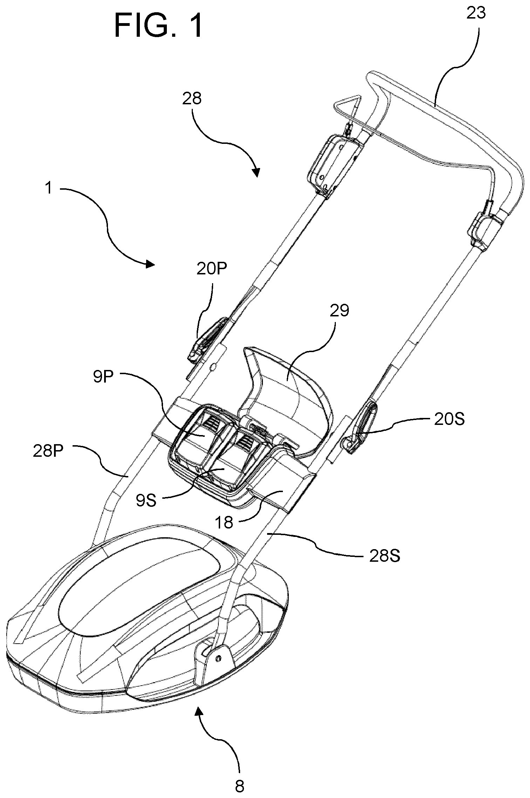

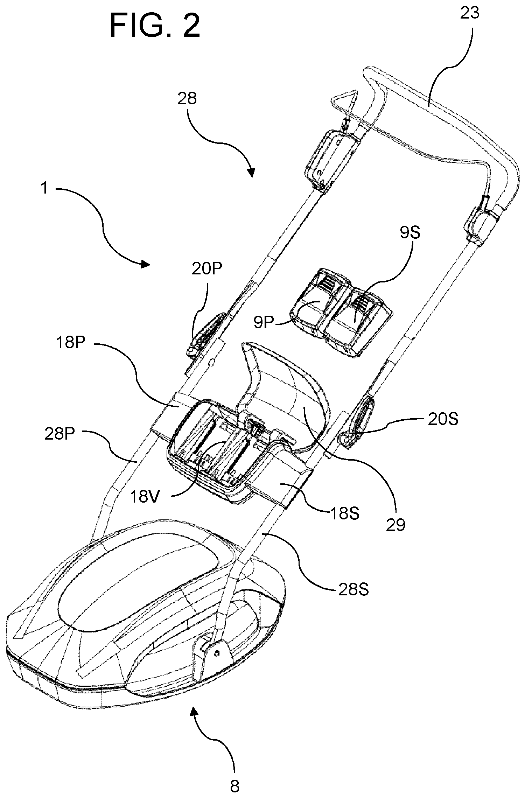

- figure 1 and figure 2 are depictions of a first embodiment of the present invention, with the cover element in the service position so as to give visibility to the batteries and to the battery housing, the batteries being arranged in their housing in figure 1 and are removed from their housing in figure 2;

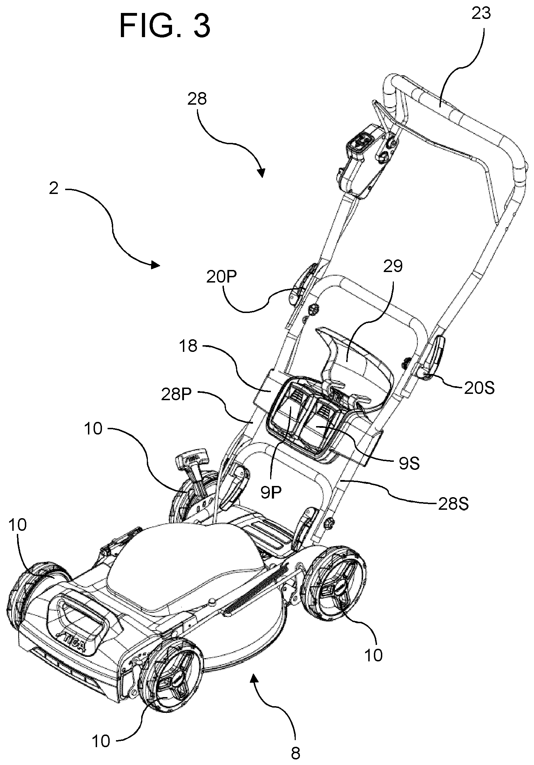

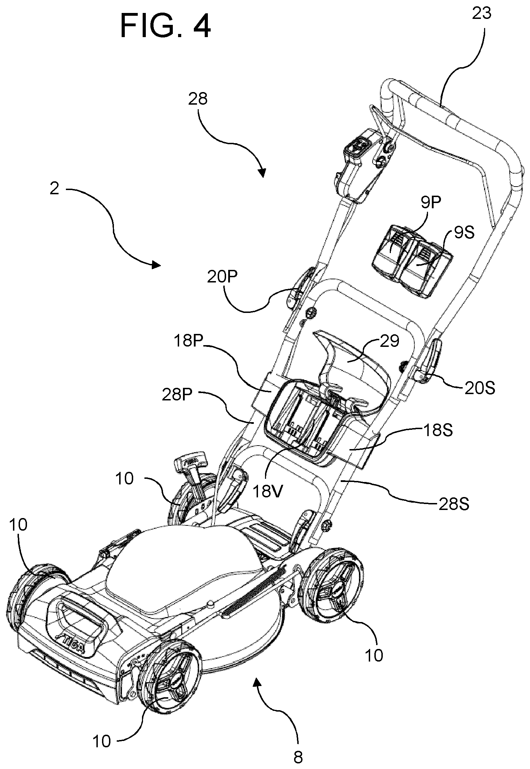

- figure 3 and figure 4 are depictions of a second embodiment of the present invention, with the cover element in the service position so as to give visibility to the batteries and to the battery housing, the batteries being arranged in their housing in figure 3 and are removed from their housing in figure 4;

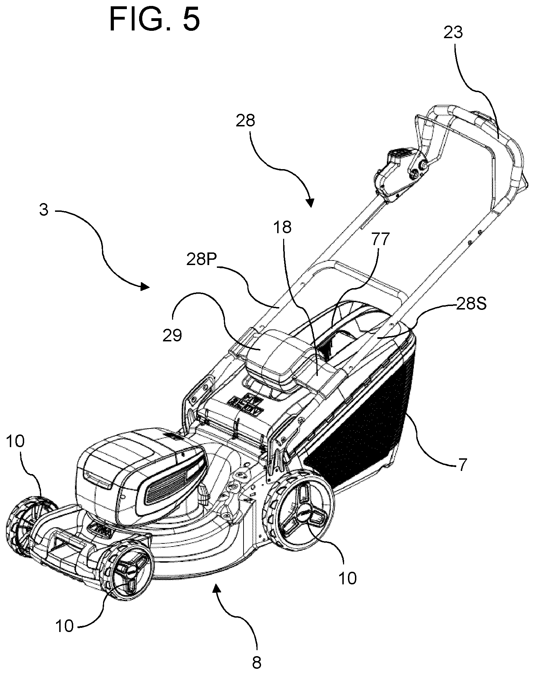

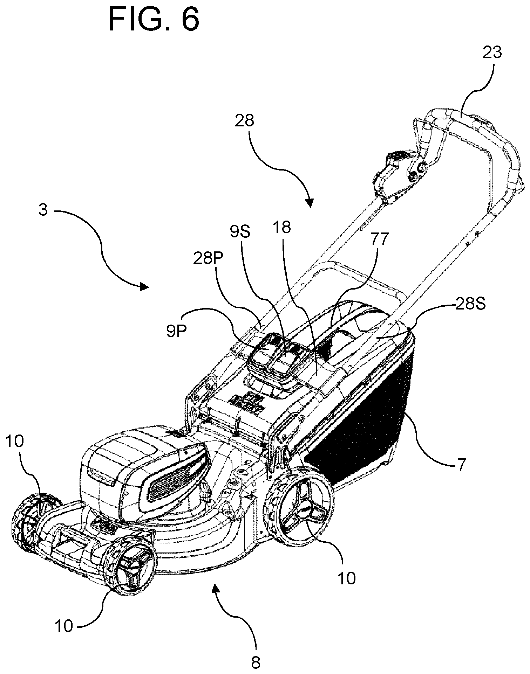

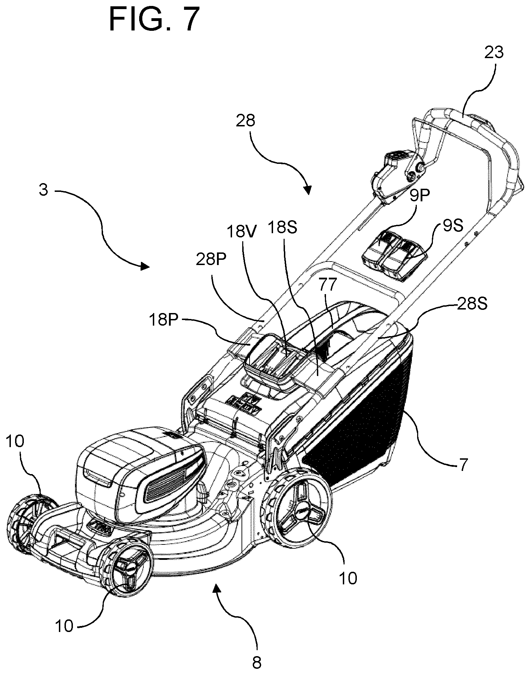

- figure 5, figure 6 and figure 7 are depictions of a third embodiment of the present invention, the cover element being in the work position in figure 5 and being instead in figure 6 and figure 7 in the service position so as to give visibility to the batteries and to the battery housing, the batteries being arranged in their housing in figure 6 and being removed from their housing in figure 7;

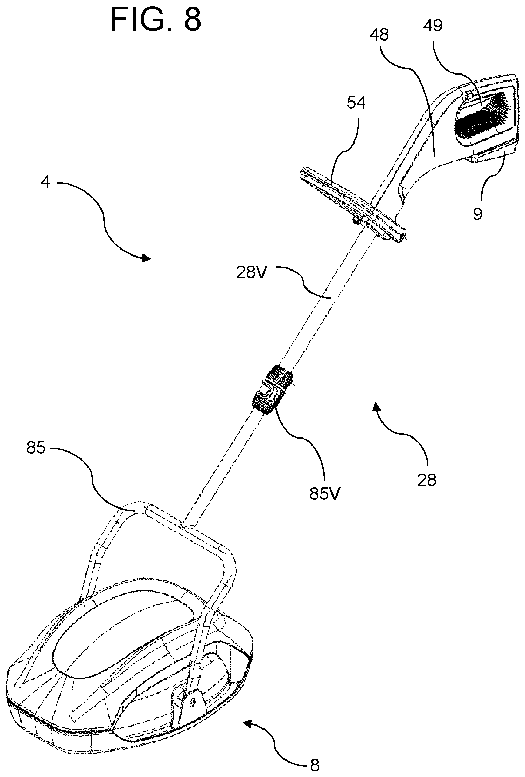

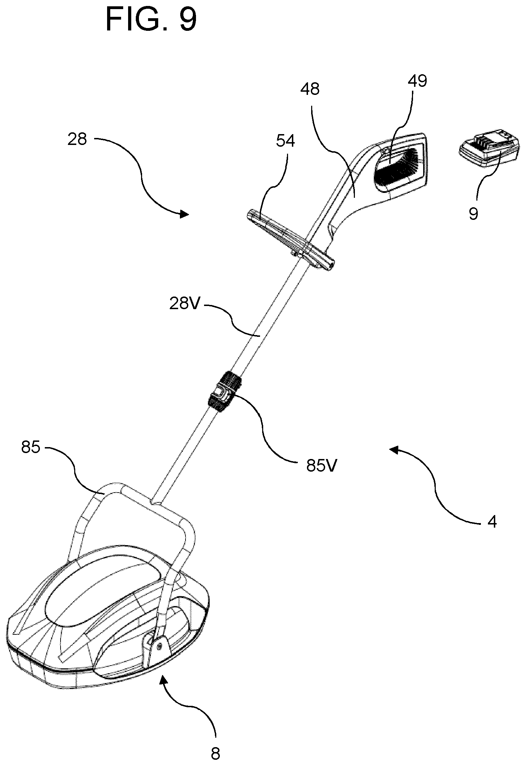

- figure 8 and figure 9 are depictions of an exemplary mobile device not falling within the claimed invention, with the cover element in the service position so as to give visibility to the batteries and to the battery housing, the batteries being arranged in their housing in figure 8 and are removed from their housing in figure 9.

### Detailed description

Figures 1 and 2 axonometrically show a mobile grass cutting device 1 which depicts a first embodiment of the present invention. The device 1 is of the hover mower type, or the type which makes use of the floating effect induced by a forced airflow, by means of which the device 1 in operating conditions (or when the cutting member is activated) is maintained at a predetermined height from the land, thus being able to be manoeuvred by the operator. The device 1 comprises a body 8, in particular in the form of a body made of a material which is simultaneously sufficiently light to allow the floating effect and sufficiently resistant to operate in an external environment. Advantageously, the body 8 is made in a plastic material. The shape of the body 8 can roughly be a cupoliform shape, such a shape being suitable for obtaining the desired air cushion.

An electric motor, an impeller and a payload are housed inside the body 8. Such components of the device 1 are known per se and are not depicted in the figures as the present invention is independent of the type of electric motor, impeller and payload (cutting member) installed in the device 1. With regard in particular to the payload, or the component of the device 1 which cuts the grass, it is intended to specify that the device 1 can comprise a cutting member such as, for example, a rotating blade or a head with cutting wires.

The payload of the device 1 is in an exposed position, so that, under operating conditions, direct contact is established with the grass which makes the cutting possible. Advantageously, the device 1 implements measures adapted to allow the operator to vary the height of the payload relative to the body 8, so as to vary the cutting height of the grass. The payload, the impeller and the electric motor are preferably keyed to the same shaft, so that the activation of the impeller occurs simultaneously with the activation of the payload, just as with the deactivation of the payload there is a simultaneous deactivation of the impeller. The impeller is thus coaxial to the payload, being placed in the body 8 at an intermediate height between the electric motor and the payload. The impeller comprises a blading adapted to generate the airflow which allows the floating effect.

Advantageously, the electric motor is of the variable rotation speed type, so as to also make the rotation speed of the payload and the rotation speed of the impeller variable. The device 1 comprises a control unit (not depicted in the figures), thus the control of the rotation speed of the electric motor can be delegated to such a control unit which can therefore impart specific commands so that said rotation speed conforms to an operator selection and/or is optimized according to the detections of one or more sensor devices (for example of a grass height sensor and/or a grass health status sensor) and/or is optimized according to predetermined algorithms performed by the control unit (for example of an energy optimization algorithm).

The device 1 further comprises a handlebar 28 extending from the body 8 and allowing the operator to manually drive the device 1, the operator driving the device 1 on foot by means of the handlebar 28. The handlebar 28 is suitably constrained to the body 8. It can be envisaged that the handlebar 28 is anchored to the body 8 at two opposite regions, for example at a left lateral region and a right lateral region of the body 8. In particular, the handlebar 28 is pivoted or screwed to the body 8 at the lateral regions of the body 8, it being possible for the operator to adjust the inclination of the handlebar 28, so as to allow it to have the desired driving comfort. To avoid obstructing the adjustment of the handlebar 28 to the preferred inclination, the lateral regions of the body 8 have concavities.

According to the present invention, the handlebar 28 comprises two longitudinal elements extending from the body 8 (in particular from regions of the body 8 opposite each other) maintaining a substantial parallelism. In the example shown by way of non-limiting explanation in figures 1 and 2, the handlebar 28 comprises three rods in hollow metal material, or a first rod 28P and a second rod 28S forming the end parts of the handlebar 28 and each then having a respective end constrained to the body 8, and an intermediate rod forming the central part of the handlebar 28 and the ends of which are constrained to the ends of the first rod 28P and the second rod 28S which are opposite with respect to the ends constrained to the body 8. Advantageously, the intermediate rod has an inverted U-shape, in which the extreme portions substantially maintain the extension directions of the first rod 28P and of the second rod 28S and in which the central portion extends instead substantially in a direction orthogonal to the extension directions of the first rod 28P and of the second rod 28S. The central portion of the intermediate rod is adapted to act as a gripping portion 23, being configured to allow it to be grasped by the operator who can thereby manually drive the device 1. Advantageously, the gripping portion 23 is a coated portion of the intermediate rod of the handlebar 28, so as to be softer and more ergonomic upon grasping.

Advantageously, the intermediate rod is a component of the handlebar 28 which is separable from the first rod 28P and the second rod 28S and/or articulated with respect to the first rod 28P and the second rod 28S, in order to allow the handlebar 28 to assume a disassembled configuration and/or a folded configuration. In the example shown by way of non-limiting explanation in figures 1 and 2 , the first rod 28P is connected to the intermediate rod by means of a first connector member 20P, as well as the second rod 28S is connected to the intermediate rod by means of a second connector member 20s. Advantageously, the first connector member 20P and the second connector member 20s each comprise a threaded tightening pin, suitable for constraining the respective pair of rods at the desired inclination, and a locking lever having effect on the threaded tightening pin, whereby the disconnection between the rods can only occur after manually disabling the locking lever. During the assembly of the handlebar 28, a constraint is thus established between the first rod 28P and the intermediate rod by means of the first connector member 20P and a constraint between the second rod 28S and the intermediate rod by means of the second connector member 20S, so that the intermediate rod is rigidly connected to the first rod 28P and to the second rod 28S. In order to then allow the transport and/or adjustment of the handlebar 28, the constraints represented by the first connector member 20P and the second connector member 20s are removed or released, so as to allow a disassembly of the intermediate rod from the first rod 28P and the second rod 28S, or a rotation of the intermediate rod with respect to the first rod 28P and the second rod 28S which allows a significant contraction of the overall size of the device 1.

In the example shown by way of non-limiting explanation in figures 1 and 2 , the assembly between the first rod 28P and the corresponding end portion of the intermediate rod forms the first longitudinal element of the handlebar 28 of the device 1, while the assembly between the second rod 28S and the corresponding end portion of the intermediate rod forms the second longitudinal element of the handlebar 28 of the device 1. The central portion of the intermediate rod, or the gripping portion 23, instead forms a connecting element between the first longitudinal element and the second longitudinal element.

Vast alternatives to the example of figures 1 and 2 are possible for the configuration of the handlebar 28. For example, in a first alternative configuration of the handlebar 28, there is a single rod of internally hollow metallic material having a substantially inverted U-shape, such a single rod integrating the first longitudinal element, the second longitudinal element and the connecting element. For example, in a second alternative configuration of the handlebar 28, there is a connecting joint between the first rod, the second rod and the intermediate rod, such a joint being able in particular to reproduce the teachings of patent EP3498073B1. For example, in a third alternative configuration of the handlebar 28, a first handlebar length adjustment member is interposed between the first rod and the intermediate rod and a second handlebar length adjustment member is interposed between the second rod and the intermediate rod, each of said adjustment members being able in particular to reproduce the teachings of patent EP3099155B1 or the teachings of patent EP3141101B1.

It should be noted that, for the purposes of the present invention, each of the first longitudinal element, the second longitudinal element and the handlebar connecting element 28 can consist of a single piece or of a plurality of pieces assembled together. It is also possible that the handlebar 28 comprises a single piece which includes the first longitudinal element, the second longitudinal element and the connecting element, as well as it is possible that one of the pieces of which the handlebar 28 is composed has portions belonging to the first longitudinal element and portions belonging to the second longitudinal element, as well as portions belonging to the connecting element. Furthermore, although the metallic material is to be considered preferred for making the first longitudinal element, the second longitudinal element and the connecting element, the invention is not to be considered limited in such a sense, since further materials, for example a plastic material, can be employed for making at least portions of one or more between the first longitudinal element, the second longitudinal element and the connecting element.

The handlebar 28 of the device according to the present invention, in particular the connecting element, can be associated with elements known in the field of grass cutting devices, such as an operator presence lever, the pressure of which allows the operator to enable the payload of the device 1 (or the cutting element) and a user interface comprising for example a button for switching on the device 1, a selector of predetermined operating modes (maximum power, energy saving, etc.) and a warning light signaling a ready-to-use status of the device 1. Furthermore, a part of the wiring of the device 1 can be associated with the handlebar 28. According to the present invention, the electric motor for driving the payload and the impeller is powered by at least one on-board battery which is applied to the handlebar 28 and supported by the handlebar 28. The at least one battery is rechargeable (e.g., a lithium rechargeable battery). The at least one battery is also removable, so as to allow, once the charge has been depleted, the disconnection of the at least one battery from the device 1, so as to be able to connect it to a charging device and to allow, once the charge has occurred, the restoration of the connection of the at least one battery to the device 1. In such a regard, the at least one battery comprises electrical and mechanical connection means configured, in combination with corresponding electrical and mechanical connection means present on board the device 1, to obtain a battery engagement which is of the releasable type.

In an embodiment of the present invention, the device 1 comprises a plurality of on-board batteries, each of which (being of a removable type) can be individually disconnected from the device 1, so as to see to a charging operation, and thus individually connected to the device 1, once the charging operation is completed. The batteries have the same dimensions (and preferably also the same nominal power) in order to be interchangeable with each other. Advantageously, the device 1 adopts a compact configuration whereby the batteries are housed, on board the device 1, in a single compartment having a plurality of housings contiguous with each other. In the example shown in figures 1 and 2, the device 1 comprises a pair of on-board batteries, or a first battery 9P and a second battery 9S which are substantially identical in terms of shape and sizing.

As shown in figures 1 and 2, the device 1 comprises a support element 18 supported by the first longitudinal element and by the second longitudinal element. In particular, the support element 18 extends between the first longitudinal element and the second longitudinal element along a direction substantially orthogonal to the directions along which the first longitudinal element and the second longitudinal element extend. The support element 18 comprises a first lateral engagement portion 18P of the first longitudinal element, a second lateral engagement portion 18S of the second longitudinal element, and a central portion, which is interposed between the first lateral portion 18P and the second lateral portion 18S. The first lateral portion 18P, the second lateral portion 18s, and the central portion extend along the support element 18 seamlessly.

Advantageously, both the application of the first battery 9P and the application of the second battery 9S occur at the central portion of the support element 18.

The support element 18 can be in the form of a bracket in plastic material (although such material is not to be understood in limiting terms, since the support element 18 can also be made of metallic material) which extends between the first rod 28P and the second rod 28S. In an embodiment thereof, an internally hollow configuration obtained by connection between at least one front half-body and at least one rear half-body can be envisaged for the support element 18. Mechanical joints and/or screws and/or rivets can be used for the connection between such half-bodies. The internally hollow configuration, in addition to making the support element 18 lighter, has the advantage of allowing the housing of a stretch of the electric cables by means of which the electrical connection between the first battery 9P and the electric motor and the connection between the second battery 9S and the electric motor occurs.

Mechanical joints and/or screws can be included for the connection between the support element 18 and the first longitudinal element, as well as for the connection between the support element 18 and the second longitudinal element. A stable fastening of the support element 18 to the longitudinal elements can be obtained by contemplating that the half-bodies forming the support element 18 both comprise, in their surfaces which do not remain visible, counter-shaped portions with respect to the longitudinal elements. Thereby, it is possible for both longitudinal elements to pass through the support element 18, in particular the first longitudinal element and the second longitudinal element passing respectively through the first lateral engagement portion 18P and the second lateral engagement portion 18S of the support element 18.

It is intended to specify that, although the positioning of the support element 18 depicted in figures 1 and 2 is particularly profitable, since the support element can fulfil, in addition to the support function of the first battery 9P and the second battery 9S, also a function of strengthening and stabilizing the structure of the handlebar 28, such positioning is not to be understood in limiting terms.

The support element 18 is at a lower height with respect to the gripping portion 23. According to a particularly advantageous aspect of the claimed invention (since it allows an optimal distribution of the weights of the device 1, while ensuring adequate ergonomics in the connection and disconnection operations of the first battery 9P and the second battery 9S), the support element 18 is located in the lower part of the handlebar 28. In other words, the distance which exists between the support element 18 and the body 8 is less than the distance which exists between the support element 18 and the gripping portion 23.

In embodiments of the present invention considered particularly advantageous, the ratio of the distance between the support element 18 and the body 8 and the distance between the gripping portion 23 and the body 8 does not exceed the value of 0.45, or does not exceed the value of 0.35, or does not exceed the value of 0.3. For example, the value of the ratio of the distance between the support element 18 and the body 8 and the distance between the gripping portion 23 and the body 8 can be about 0.45 or about 0.44 or about 0.43 or about 0.42 or about 0.41 or about 0.4 or about 0.39 or about 0.38 or about 0.37 or about 0.36 or about 0.35 or about 0.34 or about 0.33 or about 0.32 or about 0.31 or about 0.3 or about 0.29 or about 0.28 or about 0.27 or about 0.26 or about 0.25 or about 0.24 or about 0.23 or about 0.22 or about 0.21 or about 0.2 or about 0.19 or about 0.18 or about 0.17 or about 0.16 or about 0.15 or about 0.14 or about 0.13 or about 0.12 or about 0.11 or about 0.1 or about 0.09 or about 0.08 or about 0.07 or about 0.06 or about 0.05. In such a regard, it is intended to specify that:
- as the distance between the support element 18 and the body 8, the distance between an imaginary horizontal line (parallel to the land in use conditions of the device 1) passing through the centre of gravity of the support element 18 and an imaginary horizontal line (parallel to the land in conditions of use of the device 1) passing through the centre of gravity of the body 8 can be considered,
- as the distance between the support element 18 and the gripping portion 23, the distance between an imaginary horizontal line (parallel to the land in use conditions of the device 1) passing through the centre of gravity of the support element 18 and an imaginary horizontal line (parallel to the land in conditions of use of the device 1) passing through the centre of gravity of the gripping portion 23 can be considered,
- as the distance between the gripping portion 23 and the body 8, the distance between an imaginary horizontal line (parallel to the land in use conditions of the device 1) passing through the centre of gravity of the gripping portion 23 and an imaginary horizontal line (parallel to the land in conditions of use of the device 1) passing through the centre of gravity of the body 8 can be considered.

As depicted in figures 1 and 2, the support element 18 defines at its central portion a compartment 18V for housing both the first battery 9P and the second battery 9S. To such an end, the support element 18 can comprise a frame projecting from the front surface of the support element 18 to delimit the compartment 18V.

The compartment 18V is advantageously open on two of its faces in order to allow the operator to access such a compartment 18V to perform the battery connection and disconnection operations. Preferably, the accessibility to the compartment 18V is selective, so that the compartment 18V can remain closed, for example during the operation of the device 1, thus protecting the batteries from the intrusion of dirt or dust and thus preventing the batteries from being exposed in the event of rain.

So as to obtain the desired selective accessibility of the compartment 18V, the handlebar 28 further comprises a cover element 29 (advantageously made of plastic material), whose position with respect to the compartment 18V can be switched between a work position, in which the cover element 29 partially delimits the compartment 18V (thus preventing the operator from accessing the compartment 18V), and a service position, in which the cover element 29 is moved away from the compartment 18V and thus does not contribute to the delimitation of the compartment 18V (to which the operator can consequently have access). In the work position the batteries are thus enclosed within the compartment 18V between the cover element 29 and the support element 18, while in the service position the cover element 29 does not create any impediment to the removal of the batteries. The cover element 29 can advantageously be applied to the support element 18 and supported by the support element 18. The cover element 29 can have an edge which, in the work position of the cover element 29, comes into abutment with the edge of the frame of the support element 18 delimiting the compartment 18V.

In the first embodiment of the present invention referred to in figures 1 and 2, the cover element 29 is hinged to the support element 18, advantageously at one of the sides which define the compartment 18V (for example at an upper side of the compartment 18V). The cover element 29 is thus provided with a rotational degree of freedom which allows the operator to determine both the switching from the work position to the service position, and the switching from the service position to the work position. In an embodiment, a mechanical lock can be included between the cover element 29 and the support element 18, which is adapted to hold the cover element 29 in the closed position and manually deactivatable by the operator (for example by means of unlocking button or unlocking lever or key) in order to then lead the cover element 29 from the work position to the service position. According to the depiction shown in figures 1 and 2, the support element 18, in the rear closing wall of the compartment 18V and in particular near the upper side of the compartment 18V, comprises two section openings, for example quadrangular, and the cover element 29 comprises two folded appendages (advantageously obtained in a single body with the cover element 29) which are inserted in the aforesaid openings. The constraint established between the support element 18 and the cover element 29 by means of the openings and the appendages is such that the cover element 29 is exclusively allowed to rotate around the axis defined by the line joining the centres of the openings. The configuration depicted in figures 1 and 2 with openings made in a wall of the compartment 18V and folded appendages of the cover element 29 inserted in the openings has the advantage of allowing the disengagement of the cover element 29 from the support element 18, for example when the operator intends to perform an accurate operation of the cover element 29. However, the invention is indeed not to be understood as limited in such a regard, since alternative configurations can be included to allow the cover element 29 to be rotated with respect to the support element. For example, a pin can be mounted on the support element 18 and the cover element 29 can comprise a pair of hinges for the rotation of the cover element 29 around the pin, a contrast spring advantageously operating between one of the hinges and the pin, intended to force the cover element 29 into the work position.

The compartment 18V, in addition to housing the first battery 9P and the second battery 9S, can host user interface means associated with the batteries, for example a safety key or a switch for activating and deactivating the electrical circuit of the device 1 or a selector for activating a management program of the device 1 intended to maximize the autonomy time of the batteries or a display configured to make at least one piece of information related to the charge level of the first battery 9P and at least one piece of information related to the charge level of the second battery 9S explicit. It should be noted that, in an alternate embodiment of the present invention, at least one of the safety key, the safety switch, the energy efficiency program selector and the display is associated (instead of the compartment 18V) with the user interface arranged near the gripping portion 23.

Figures 3 and 4 axonometrically show a mobile grass cutting device 2 depicting a second embodiment of the present invention. The device 2 is of the walk behind mower type and uses a pair of front wheels and a pair of rear wheels for the pushed advancement. The body 8 of the device 2 comprises a frame (advantageously made of metallic material), to which the wheels 10 are rotatably connected and to which a body (advantageously made of plastic material) is fastened. The body houses an electric motor and a payload therein. Such components of the device 2 are known per se and are not depicted in the figures as the present invention is independent of the type of electric motor and payload (cutting member) installed in the device 2. With regard in particular to the payload, or the component of the device 1 which cuts the grass, it is intended to specify that the device 2 can comprise a cutting member such as, for example, a rotating blade or a head with cutting wires.

The device 2 according to the second embodiment of the invention (depicted in figures 3 and 4) comprises a handlebar 28 whose features coincide with the features of the handlebar 28 of the device 1 according to the first embodiment of the invention. For the features of the handlebar 28 of the device 2 according to the second embodiment of the invention, reference is therefore made to the previous detailed description of the features of the handlebar 28 of the device 1 according to the first embodiment of the invention.

Distinguishing with respect to the handlebar 28 of the device 1 according to the first embodiment of the invention, it should be noted that, in the handlebar 28 of the device 2 according to the second embodiment of the invention, the first longitudinal element and the second longitudinal element belong to a single rod in internally hollow metallic material, such a rod having an inverted-U shape, so that the structure of the handlebar 28 is even more robust. Then, in addition to the operator presence lever, there is also a traction coupling lever (arranged in the rear with respect to the gripping portion 23), or a lever which, when pressed by the operator, allows the traction to be coupled to the wheels 10 and consequently to advance the device 2. Finally, it should be noted that the fastening of the handlebar 28 to the body 8 occurs at the frame, the latter being for this purpose provided with an inverted U-shaped rear anchoring portion. For the fastening of the first longitudinal element and the second longitudinal element, connector members similar to the first connector member 20P and the second connector member 20S described above can be used, or with a pair of threaded tightening pins for the connection between the frame rods and the handlebar 28 and with a pair of locking levers each having an effect on the respective threaded tightening pin.

Figures 5 to 7 axonometrically show a mobile grass cutting device 3 depicting a third embodiment of the present invention. The device 3 according to the third embodiment of the present invention is still of the walk behind mower type, but differs from the device 2 according to the second embodiment of the present invention in that it further comprises a bag 7 for collecting the cut grass. Such a bag 7 is selectively engageable with the body 8, so that the operator is given the ability to keep the bag 7 in the device 1 (to cut the grass in collection mode) or to remove the bag 7 from the device 1 (to cut the grass in mulching mode). The bag 7 can be connected to the body by means of a tunnel capable of allowing the grass cut by the payload to be conveyed inside the bag 7 for the purpose of its collection.

In the depiction provided by way of non-limiting explanation in figures 5 to 7, the upper wall of the bag 7 is formed by a rigid cover (which is preferably made of plastic material), so that a greater strength is given to the structure of the bag 7 and so that the device 3 has an effective protection element, capable of prevent any objects collected by the device 3 from being hurled away by the device 3.

Furthermore, the bag 7 can comprise a handle 77 adapted to be used by the operator as a gripping element and thus to facilitate operations such as removing the bag 7 from the device 3, transporting and handling the bag 7 for the purpose of unloading the collected cut grass and reintegrating the bag 7 in the device 3. Preferably, the handle 77 of the bag 7 is integral with the rigid cover of the bag 7. Even more preferably, the handle 77 of the bag 7 is made in a single body with the rigid cover of the bag 7. According to a possible configuration, the handle 77 is a longitudinally extended element.

The device 3 according to the third embodiment of the invention (depicted in figures 5 to 7) comprises a handlebar 28 whose features coincide with the features of the handlebar 28 of the device 2 according to the second embodiment of the invention, the features of the handlebar 28 of the device 2 according to the second embodiment of the invention, in turn following the features of the handlebar 28 of the device 1 according to the first embodiment of the invention. For the features of the handlebar 28 of the device 2 according to the second embodiment of the invention, in turn following the features of the handlebar 28 of the device 1 according to the first embodiment of the invention. For the features of the handlebar 28 of the device 3 according to the third embodiment of the invention, reference is therefore made to the previous detailed descriptions of the features of the handlebar 28 of the device 1 according to the first embodiment of the invention and of the handlebar 28 of the device 2 according to the second embodiment of the invention.

Distinguishing with respect to the handlebar 28 of the device 2 according to the second embodiment of the invention, it should be noted that, in the handlebar 28 of the device 3 according to the third embodiment of the invention, the cover element 29 adapted to ensure the selective accessibility to the compartment 18V is of the type which can be unhooked with respect to the support element 18 (instead of being hinged to the support element 18). Therefore, by virtue of suitable releasable hooking means operating between the cover element 29 and the support element 18, the cover element 29 can be switched between the work position, in which the first battery 9P and the second battery 9S are enclosed within the compartment 18V (or between the cover element 29 and the support element 18) and the service position, in which the cover element 29 does not contribute to the definition of the compartment 18V, so that the first battery 9P and the second battery 9S can be removed from the compartment 18V (in particular to perform a recharging operation thereof). Given the configuration of the cover element 29 according to the third embodiment of the invention referred to in figures 5 to 7, the switching between the work position and the service position occurs by means of a separation of the cover element 29 from the remaining components of the device 3, in particular from the support element 18. As a further distinction of the device 3 according to the third embodiment of the present invention with respect to the device 2 according to the second embodiment of the present invention, it should be noted that, to avoid causing any interference with the bag 7, the fastening of the handlebar 28 to the body 8 occurs by means of a pair of rear anchoring arms having opposite ends connected, for example by means of screws, respectively to the body 8 (in particular to the frame) and to the first longitudinal element of the handlebar 28 or to the second longitudinal element of the handlebar 28.

Figures 8 and 9 axonometrically show a mobile grass cutting device 4 depicting a non-claimed example of a mobile device. The device 4 is of the hover mower type and differs from the device 1 according to the first embodiment of the invention for a different configuration of the handlebar 28. The remaining components of the device 4 according to the example (in particular the body 8 comprising the body for housing the electric motor, impeller and payload) coincide with the components of the device 1 according to the first embodiment of the present invention.

The handlebar 28 of the device 4 according to the example comprises a single longitudinal element 28V, made in particular by means of a rod made of internally hollow metallic material. The longitudinal element 28V is constrained to the body 8, preferably at one end thereof. In an example, the constraint between the longitudinal element 28V and the body 8 is established by means of an anchoring element 85 configured to anchor the longitudinal element 28V to two opposite regions of the body 8, for example to a left lateral region and to a right lateral region of the body 8. In particular, the anchoring element 85 of the handlebar 28 is pivoted or screwed to the body 8 at the lateral regions of the body 8, it being possible for the operator to adjust the inclination of the handlebar 28, so as to allow it to have the desired driving comfort. To avoid obstructing the adjustment of the handlebar 28 to the preferred inclination, the lateral regions of the body 8 have concavities.

The anchoring element 85 can advantageously have an inverted Y-shape and can be formed by joining rods in internally hollow metallic material, for example by welding a first inverted U-shaped rod with a second straight rod. The anchoring element 85 can be made in a single piece with the longitudinal element 28V or can form a distinct component of the handlebar 28 from the longitudinal element 28V, in which case the handlebar 28 can further comprise a joint 85V for the connection between the anchoring element 85 and the longitudinal element 28V.

The handlebar 28 of the device 4 further comprises a grasping element 48 arranged at the end of the longitudinal element 28V opposite the end of the latter constrained to the body 8, or at the end of the latter constrained to the anchoring element 85. The grasping element 48, advantageously made of plastic and connected to the longitudinal element 28V by means of mechanical joints or screws, is configured to allow the standing operator to manually drive the device 4. To such an end, the grasping element 48 comprises a grip 49, arranged at the end of the grasping element 48 opposite the end connected to the longitudinal element 28V and configured to be grasped with one hand by the operator. In the depiction of figures 8 and 9, the grasping element 48 advantageously also comprises an auxiliary grip 54 (arranged near the end of the grasping element 48 connected to the longitudinal element 28) which, being able to be grasped by the operator with the hand not engaged to the grip 49, facilitates a more comfortable and precise operation of the device 4. The grasping element 48 can comprise further elements with respect to those depicted in figures 8 and 9, in particular a user interface and a deflector intended to protect the operator's face from any objects hurled by the device 4, in particular by the payload.

The grasping element 48 is configured to allow the battery 9 to be applied to the handlebar 28 at the grasping element 48. It is indeed a peculiar feature of the device 4 that the battery 9 is supported by the grasping element 48 of the handlebar 28. Therefore, the grasping element 48 has means for making a mechanical connection and an electrical connection with the battery 9 which are of the releasable type. In order to ensure a particularly compact shape of the handlebar 28, the battery 9 is arranged near the grip 49, being in particular applied at a face of the grasping element contiguous to the grip 49. So as to then ensure that the battery 9 is parked in a protected position, in particular not exposed to rain, the face to which the battery 9 is applied is a lower face of the grasping element 48 of the handlebar 28, or a face facing the land.

### Benefits of the invention

From the above description it can easily be seen that the present invention is able to fully achieve, in all embodiments in which the invention can be articulated, the objectives underlying it, in particular overcoming the critical issues found in the mobile grass cutting device described in patent application US2021/0112710A1 and in the mobile grass cutting device Stiga Collector 543 AE Kit.

In fact, the present invention allows a significant lightening of the body of the mobile device for cutting grass, the function of housing the batteries no longer being assigned to the body. When the mobile grass cutting device is in particular of the hover mower type, this results in an improvement of the floating effect, as well as a reduction of the electrical power necessary to obtain such a floating effect. Furthermore, such lightening corresponds to a concomitant limiting of the overall dimensions of the body, with consequent increased visibility, for the operator driving the device, of the area in front of the device, so that the operator (regardless of whether the device is of the hover mower type or walk behind mower type) can easily notice any obstacles which can interfere with the advancement of the device. Above all, the present invention allows to achieve a device for cutting grass characterized by an improved distribution of the weights thereof. In fact, since the batteries are moved from the body to the handlebar and since the batteries significantly contribute to the overall weight of the device, a much more homogeneous weight distribution is obtained, which makes it much easier to drive and manoeuvre the device. Furthermore, since the centre of gravity is close to the gripping portion (in the first to third embodiments) or to the grip (in the fourth embodiment), the moment of the weight force which the operator must bear is lower, so that the operation of the device is less tiring.

Further, the present invention, in all of its embodiments, has the advantage of ensuring considerable ergonomics with respect to the battery removal and battery repositioning operations. In fact, the batteries are located in easily accessible positions and at optimal heights with respect to the land. With regard to the increased ergonomics of the device determined by the positioning of the batteries on the handlebar, it should be noted that (in the third embodiment of the present invention) such an increase in ergonomics is not to the detriment of the accessibility of the collection bag, which remains optimal.

The device according to the present invention also ensures adequate protection of the batteries from dirt, dust and rain, is competitive from the point of view of time and production costs and is also capable of ensuring a considerable ease of any technical assistance interventions.

Compared in particular with the device described by US5,551,220, the device according to the present invention denotes a surprising improvement with regard to the comfort of the manual driving of the device, since the application of the batteries to the portion of the handlebar adjacent to the body (and therefore at a low height with respect to the land) significantly increases the handling and manoeuvrability of the device. The advantages of the invention related to driving comfort are particularly appreciated in the embodiment in which the device is of the hover mower type, since the operator senses the device as significantly lighter to support and as definitely easier to drive.

### Field of the Invention

The present invention relates to a mobile device for cutting grass comprising a body, a handlebar, at least one payload, an electric motor and at least one battery. Such a device can be of the hover mower type or of the walk behind mower type. Such a device can be advantageously employed for the maintenance of turfgrasses, for example of turfgrasses in private home gardens.

### Background art

In view of the ever-increasing attention to aspects of environmental sustainability, as well as regulatory provisions oriented precisely towards such environmental sustainability, there has been a sudden affirmation on the market of vehicles provided with electric motors powered by rechargeable on-board batteries.

The field of garden maintenance equipment, in particular devices for cutting grass, is also evolving significantly in the direction of increasing environmental sustainability, whereby there is a growing demand on the market for devices, whether manually driven or self driven, provided with electric motors (for propulsion and/or for the activation of loads such as cutting members) powered by rechargeable on-board batteries. Moreover, the power supply of a mobile device for cutting grass by means of a battery has obvious advantages over alternative power supply modes.

In fact, when compared to fuel, battery power supply allows to avoid the emission of exhaust gases which not only represent a source of environmental pollution, but are also obviously harmful to the health of the operator driving the device. Furthermore, in the case of battery power supply, the operator is exempted from having to carry out potentially risky operations, such as having to store and spill fuels, or highly flammable liquids.

If instead compared to power supply by cable, battery power supply is undoubtedly preferable, since it is considerably more comfortable as the operator is exempted from having to unwind and wind the cable with each maintenance intervention, the cable then often being an obstacle to the advancement of the device. Furthermore, the cable (unless extensions which make the maintenance interventions even more inconvenient for the operator are used) places an obvious limit, represented by its length, to the range of action of the device. This is a very significant drawback, in the case in which (as indeed frequently occurs) the plot of land on which the maintenance intervention must be performed is rather extensive or has a very irregular shape. Finally, the cable, dragging on the ground during the advancement of the device, undergoes a substantial accumulation of dirt on its surface (and also of pathogens), resulting in harm to the operator who must then come into contact with such a cable in order to unwind or wind it.

Patent application US2021/0112710A1 discloses a mobile hover mower type device which is manually driven (or provided with an impeller for generating an air flow intended to cause a floating effect such as to keep the mobile grass cutting device raised with respect to the ground and thus to allow the advancement thereof) comprising a rechargeable on-board battery. The device referred to in patent application US2021/0112710A1 includes a body on which the cutting element, the impeller, the electric motor for activating the cutting element and the impeller and the battery for powering the electric motor are installed. The configuration of a mobile grass cutting device described in patent application US2021/0112710A1, while being of interest in that it allows to obtain the aforementioned advantages of the battery power supply with respect to fuel supply and cable power supply, is not however free from technical drawbacks since the battery is arranged in a position in which it affects the heaviness of the device, impairs the floatation and manoeuvrability, constitutes an encumbrance which limits the field of visibility of the operator and is subject to the accumulation of dirt and dust.

The device Stiga Collector 543 AE Kit is also known, such a device being a manually driven lawnmower of the type with wheels, in particular provided with a pair of front wheels and a pair of rear wheels to allow a pushing advancement of the device. The device Stiga Collector 543 AE Kit is provided with a rechargeable on-board battery, installed inside the body of the device together with the electric motor powered by the battery and the cutting member activated by the electric motor. The mobile grass cutting device Stiga Collector 543 AE Kit is also of interest as it allows to obtain all the benefits of battery power supply, but it can also be improved in terms of weight distribution, overall dimensions and susceptibility to dirt and dust accumulation.

Document EP0841000A1 discloses a brush cutter comprising a gripping portion arranged at the end of the handlebar and a battery pack hooked to the gripping portion. Document US2011/0179757A1 discloses a hover mower type grass cutting device, the handlebar of which is formed by a single stick and comprises a grip in which a battery is inserted. Document EP3295782A1 discloses an electric brush cutter comprising, at the end of the handlebar, a casing which houses the control unit and the motor, the lower surface of the casing being provided with a support for a battery pack. Document US2021/0153433A1 discloses a brush cutter comprising a casing arranged at the end of the handlebar, a pair of batteries being removably associated with the casing. Document US5,551,220 discloses a grass cutting device comprising a frame and a handlebar applied to the frame, in which a battery and a solar cell panel are mounted to the handlebar, the battery being positioned adjacent to the gripping portion of the handlebar and the solar cell panel being positioned between the battery and the frame.

### Objects of the invention

In light of the prior art, it is an object of the present disclosure to overcome the drawbacks lamented in relation to the mobile grass cutting device described in patent application US2021/0112710A1 and in relation to the mobile grass cutting device Stiga Collector 543 AE Kit.

It is a further object of the present disclosure to provide a manually driven mobile grass cutting device with on-board battery which is optimal from the point of view of environmental sustainability, both when articulated according to the hover mower configuration, and when articulated according to the walk behind mower configuration.

It is a further object of the present disclosure to provide a manually driven mobile grass cutting device with on-board battery which is characterized by optimal ergonomics, especially with regard to the operations of removing the battery so as to perform the recharging thereof and putting the battery back in position once the recharging is completed.

It is a further object of the present disclosure to provide a manually driven mobile grass cutting device with on-board battery which is characterized by an optimal weight distribution, from which a greater handling of the device is obtained, also with improved floating capacity in the event of a hover mower configuration.

It is a further object of the present disclosure to provide a manually driven mobile grass cutting device with on-board battery which is characterized by an optimal energy efficiency, having particularly low consumption and consequently a particularly long autonomy time.

It is a further object of the present disclosure to provide a manually driven mobile grass cutting device with on-board battery which allows the operator to have a wide field of view while driving the device, the land immediately in front of the device being in particular clearly visible. Optimal ergonomics, especially with regard to the removal of the battery in order to perform the recharging thereof and putting the battery back once the recharging is completed.

It is a further object of the present disclosure to provide a manually driven mobile grass cutting device with on-board battery, in which the device is optimally protected from dirt and dust and in which the on-board battery is not exposed to rain.

It is a further object of the present disclosure to provide a manually driven mobile grass cutting device with on-board battery, having a particularly compact and aesthetically pleasing shape.

It is a further object of the present disclosure to provide a manually driven mobile grass cutting device with on-board battery, which is competitive from a production time and cost point of view.

It is further object of the present disclosure to provide a manually driven mobile grass cutting device with on-board battery, for which any technical assistance interventions are particularly easy.

### Aspects of the invention

The stated objects are effectively achieved by means of a mobile device in accordance with claim 1.

Further preferred embodiments are defined by the dependent claims.

### Presentation of the figures

The above aspects will become even clearer by means of, in addition to the following detailed description, also the figures accompanying such a detailed description, in which:
- figure 1 and figure 2 are depictions of a first embodiment of the present invention, with the cover element in the service position so as to give visibility to the batteries and to the battery housing, the batteries being arranged in their housing in figure 1 and are removed from their housing in figure 2;
- figure 3 and figure 4 are depictions of a second embodiment of the present invention, with the cover element in the service position so as to give visibility to the batteries and to the battery housing, the batteries being arranged in their housing in figure 3 and are removed from their housing in figure 4;
- figure 5, figure 6 and figure 7 are depictions of a third embodiment of the present invention, the cover element being in the work position in figure 5 and being instead in figure 6 and figure 7 in the service position so as to give visibility to the batteries and to the battery housing, the batteries being arranged in their housing in figure 6 and being removed from their housing in figure 7;
- figure 8 and figure 9 are depictions of an exemplary mobile device not falling within the claimed invention, with the cover element in the service position so as to give visibility to the batteries and to the battery housing, the batteries being arranged in their housing in figure 8 and are removed from their housing in figure 9.

### Detailed description

Figures 1 and 2 axonometrically show a mobile grass cutting device 1 which depicts a first embodiment of the present invention. The device 1 is of the hover mower type, or the type which makes use of the floating effect induced by a forced airflow, by means of which the device 1 in operating conditions (or when the cutting member is activated) is maintained at a predetermined height from the land, thus being able to be manoeuvred by the operator. The device 1 comprises a body 8, in particular in the form of a body made of a material which is simultaneously sufficiently light to allow the floating effect and sufficiently resistant to operate in an external environment. Advantageously, the body 8 is made in a plastic material. The shape of the body 8 can roughly be a cupoliform shape, such a shape being suitable for obtaining the desired air cushion.

An electric motor, an impeller and a payload are housed inside the body 8. Such components of the device 1 are known per se and are not depicted in the figures as the present invention is independent of the type of electric motor, impeller and payload (cutting member) installed in the device 1. With regard in particular to the payload, or the component of the device 1 which cuts the grass, it is intended to specify that the device 1 can comprise a cutting member such as, for example, a rotating blade or a head with cutting wires.

The payload of the device 1 is in an exposed position, so that, under operating conditions, direct contact is established with the grass which makes the cutting possible. Advantageously, the device 1 implements measures adapted to allow the operator to vary the height of the payload relative to the body 8, so as to vary the cutting height of the grass. The payload, the impeller and the electric motor are preferably keyed to the same shaft, so that the activation of the impeller occurs simultaneously with the activation of the payload, just as with the deactivation of the payload there is a simultaneous deactivation of the impeller. The impeller is thus coaxial to the payload, being placed in the body 8 at an intermediate height between the electric motor and the payload. The impeller comprises a blading adapted to generate the airflow which allows the floating effect.

Advantageously, the electric motor is of the variable rotation speed type, so as to also make the rotation speed of the payload and the rotation speed of the impeller variable. The device 1 comprises a control unit (not depicted in the figures), thus the control of the rotation speed of the electric motor can be delegated to such a control unit which can therefore impart specific commands so that said rotation speed conforms to an operator selection and/or is optimized according to the detections of one or more sensor devices (for example of a grass height sensor and/or a grass health status sensor) and/or is optimized according to predetermined algorithms performed by the control unit (for example of an energy optimization algorithm).

The device 1 further comprises a handlebar 28 extending from the body 8 and allowing the operator to manually drive the device 1, the operator driving the device 1 on foot by means of the handlebar 28. The handlebar 28 is suitably constrained to the body 8. It can be envisaged that the handlebar 28 is anchored to the body 8 at two opposite regions, for example at a left lateral region and a right lateral region of the body 8. In particular, the handlebar 28 is pivoted or screwed to the body 8 at the lateral regions of the body 8, it being possible for the operator to adjust the inclination of the handlebar 28, so as to allow it to have the desired driving comfort. To avoid obstructing the adjustment of the handlebar 28 to the preferred inclination, the lateral regions of the body 8 have concavities.

According to the present invention, the handlebar 28 comprises two longitudinal elements extending from the body 8 (in particular from regions of the body 8 opposite each other) maintaining a substantial parallelism. In the example shown by way of non-limiting explanation in figures 1 and 2, the handlebar 28 comprises three rods in hollow metal material, or a first rod 28P and a second rod 28S forming the end parts of the handlebar 28 and each then having a respective end constrained to the body 8, and an intermediate rod forming the central part of the handlebar 28 and the ends of which are constrained to the ends of the first rod 28P and the second rod 28S which are opposite with respect to the ends constrained to the body 8. Advantageously, the intermediate rod has an inverted U-shape, in which the extreme portions substantially maintain the extension directions of the first rod 28P and of the second rod 28S and in which the central portion extends instead substantially in a direction orthogonal to the extension directions of the first rod 28P and of the second rod 28S. The central portion of the intermediate rod is adapted to act as a gripping portion 23, being configured to allow it to be grasped by the operator who can thereby manually drive the device 1. Advantageously, the gripping portion 23 is a coated portion of the intermediate rod of the handlebar 28, so as to be softer and more ergonomic upon grasping.

Advantageously, the intermediate rod is a component of the handlebar 28 which is separable from the first rod 28P and the second rod 28S and/or articulated with respect to the first rod 28P and the second rod 28S, in order to allow the handlebar 28 to assume a disassembled configuration and/or a folded configuration. In the example shown by way of non-limiting explanation in figures 1 and 2, the first rod 28P is connected to the intermediate rod by means of a first connector member 20P, as well as the second rod 28S is connected to the intermediate rod by means of a second connector member 20s. Advantageously, the first connector member 20P and the second connector member 20s each comprise a threaded tightening pin, suitable for constraining the respective pair of rods at the desired inclination, and a locking lever having effect on the threaded tightening pin, whereby the disconnection between the rods can only occur after manually disabling the locking lever. During the assembly of the handlebar 28, a constraint is thus established between the first rod 28P and the intermediate rod by means of the first connector member 20P and a constraint between the second rod 28S and the intermediate rod by means of the second connector member 20S, so that the intermediate rod is rigidly connected to the first rod 28P and to the second rod 28S. In order to then allow the transport and/or adjustment of the handlebar 28, the constraints represented by the first connector member 20P and the second connector member 20s are removed or released, so as to allow a disassembly of the intermediate rod from the first rod 28P and the second rod 28S, or a rotation of the intermediate rod with respect to the first rod 28P and the second rod 28S which allows a significant contraction of the overall size of the device 1.

In the example shown by way of non-limiting explanation in figures 1 and 2 , the assembly between the first rod 28P and the corresponding end portion of the intermediate rod forms the first longitudinal element of the handlebar 28 of the device 1, while the assembly between the second rod 28S and the corresponding end portion of the intermediate rod forms the second longitudinal element of the handlebar 28 of the device 1. The central portion of the intermediate rod, or the gripping portion 23, instead forms a connecting element between the first longitudinal element and the second longitudinal element.

Vast alternatives to the example of figures 1 and 2 are possible for the configuration of the handlebar 28. For example, in a first alternative configuration of the handlebar 28, there is a single rod of internally hollow metallic material having a substantially inverted U-shape, such a single rod integrating the first longitudinal element, the second longitudinal element and the connecting element. For example, in a second alternative configuration of the handlebar 28, there is a connecting joint between the first rod, the second rod and the intermediate rod, such a joint being able in particular to reproduce the teachings of patent EP3498073B1. For example, in a third alternative configuration of the handlebar 28, a first handlebar length adjustment member is interposed between the first rod and the intermediate rod and a second handlebar length adjustment member is interposed between the second rod and the intermediate rod, each of said adjustment members being able in particular to reproduce the teachings of patent EP3099155B1 or the teachings of patent EP3141101B1.

It should be noted that, for the purposes of the present invention, each of the first longitudinal element, the second longitudinal element and the handlebar connecting element 28 can consist of a single piece or of a plurality of pieces assembled together. It is also possible that the handlebar 28 comprises a single piece which includes the first longitudinal element, the second longitudinal element and the connecting element, as well as it is possible that one of the pieces of which the handlebar 28 is composed has portions belonging to the first longitudinal element and portions belonging to the second longitudinal element, as well as portions belonging to the connecting element. Furthermore, although the metallic material is to be considered preferred for making the first longitudinal element, the second longitudinal element and the connecting element, the invention is not to be considered limited in such a sense, since further materials, for example a plastic material, can be employed for making at least portions of one or more between the first longitudinal element, the second longitudinal element and the connecting element.

The handlebar 28 of the device according to the present invention, in particular the connecting element, can be associated with elements known in the field of grass cutting devices, such as an operator presence lever, the pressure of which allows the operator to enable the payload of the device 1 (or the cutting element) and a user interface comprising for example a button for switching on the device 1, a selector of predetermined operating modes (maximum power, energy saving, etc.) and a warning light signaling a ready-to-use status of the device 1. Furthermore, a part of the wiring of the device 1 can be associated with the handlebar 28. According to the present invention, the electric motor for driving the payload and the impeller is powered by at least one on-board battery which is applied to the handlebar 28 and supported by the handlebar 28. The at least one battery is rechargeable (e.g., a lithium rechargeable battery). The at least one battery is also removable, so as to allow, once the charge has been depleted, the disconnection of the at least one battery from the device 1, so as to be able to connect it to a charging device and to allow, once the charge has occurred, the restoration of the connection of the at least one battery to the device 1. In such a regard, the at least one battery comprises electrical and mechanical connection means configured, in combination with corresponding electrical and mechanical connection means present on board the device 1, to obtain a battery engagement which is of the releasable type.

In an embodiment of the present invention, the device 1 comprises a plurality of on-board batteries, each of which (being of a removable type) can be individually disconnected from the device 1, so as to see to a charging operation, and thus individually connected to the device 1, once the charging operation is completed. The batteries have the same dimensions (and preferably also the same nominal power) in order to be interchangeable with each other. Advantageously, the device 1 adopts a compact configuration whereby the batteries are housed, on board the device 1, in a single compartment having a plurality of housings contiguous with each other. In the example shown in figures 1 and 2, the device 1 comprises a pair of on-board batteries, or a first battery 9P and a second battery 9S which are substantially identical in terms of shape and sizing.

As shown in figures 1 and 2, the device 1 comprises a support element 18 supported by the first longitudinal element and by the second longitudinal element. In particular, the support element 18 extends between the first longitudinal element and the second longitudinal element along a direction substantially orthogonal to the directions along which the first longitudinal element and the second longitudinal element extend. The support element 18 comprises a first lateral engagement portion 18P of the first longitudinal element, a second lateral engagement portion 18S of the second longitudinal element, and a central portion, which is interposed between the first lateral portion 18P and the second lateral portion 18S. The first lateral portion 18P, the second lateral portion 18s, and the central portion extend along the support element 18 seamlessly.

Advantageously, both the application of the first battery 9P and the application of the second battery 9S occur at the central portion of the support element 18.

The support element 18 can be in the form of a bracket in plastic material (although such material is not to be understood in limiting terms, since the support element 18 can also be made of metallic material) which extends between the first rod 28P and the second rod 28S. In an embodiment thereof, an internally hollow configuration obtained by connection between at least one front half-body and at least one rear half-body can be envisaged for the support element 18. Mechanical joints and/or screws and/or rivets can be used for the connection between such half-bodies. The internally hollow configuration, in addition to making the support element 18 lighter, has the advantage of allowing the housing of a stretch of the electric cables by means of which the electrical connection between the first battery 9P and the electric motor and the connection between the second battery 9S and the electric motor occurs.

Mechanical joints and/or screws can be included for the connection between the support element 18 and the first longitudinal element, as well as for the connection between the support element 18 and the second longitudinal element. A stable fastening of the support element 18 to the longitudinal elements can be obtained by contemplating that the half-bodies forming the support element 18 both comprise, in their surfaces which do not remain visible, counter-shaped portions with respect to the longitudinal elements. Thereby, it is possible for both longitudinal elements to pass through the support element 18, in particular the first longitudinal element and the second longitudinal element passing respectively through the first lateral engagement portion 18P and the second lateral engagement portion 18S of the support element 18.

It is intended to specify that, although the positioning of the support element 18 depicted in figures 1 and 2 is particularly profitable, since the support element can fulfil, in addition to the support function of the first battery 9P and the second battery 9S, also a function of strengthening and stabilizing the structure of the handlebar 28, such positioning is not to be understood in limiting terms.

The support element 18 is at a lower height with respect to the gripping portion 23. According to a particularly advantageous aspect of the claimed invention (since it allows an optimal distribution of the weights of the device 1, while ensuring adequate ergonomics in the connection and disconnection operations of the first battery 9P and the second battery 9S), the support element 18 is located in the lower part of the handlebar 28. In other words, the distance which exists between the support element 18 and the body 8 is less than the distance which exists between the support element 18 and the gripping portion 23.

In accordance with the present invention, the ratio of the distance between the support element 18 and the body 8 and the distance between the gripping portion 23 and the body 8 does not exceed the value of 0.45. In accordance with the present invention, the value of the ratio of the distance between the support element 18 and the body 8 and the distance between the gripping portion 23 and the body 8 can be about 0.45 or about 0.44 or about 0.43 or about 0.42 or about 0.41 or about 0.4 or about 0.39 or about 0.38 or about 0.37 or about 0.36 or about 0.35 or about 0.34 or about 0.33 or about 0.32 or about 0.31 or about 0.3 or about 0.29 or about 0.28 or about 0.27 or about 0.26 or about 0.25 or about 0.24 or about 0.23 or about 0.22 or about 0.21 or about 0.2 or about 0.19 or about 0.18 or about 0.17 or about 0.16 or about 0.15 or about 0.14 or about 0.13 or about 0.12 or about 0.11 or about 0.1 or about 0.09 or about 0.08 or about 0.07 or about 0.06 or about 0.05. In such a regard, it is intended to specify that:
- as the distance between the support element 18 and the body 8, the distance between an imaginary horizontal line (parallel to the land in use conditions of the device 1) passing through the centre of gravity of the support element 18 and an imaginary horizontal line (parallel to the land in conditions of use of the device 1) passing through the centre of gravity of the body 8 can be considered,
- as the distance between the support element 18 and the gripping portion 23, the distance between an imaginary horizontal line (parallel to the land in use conditions of the device 1) passing through the centre of gravity of the support element 18 and an imaginary horizontal line (parallel to the land in conditions of use of the device 1) passing through the centre of gravity of the gripping portion 23 can be considered,
- as the distance between the gripping portion 23 and the body 8, the distance between an imaginary horizontal line (parallel to the land in use conditions of the device 1) passing through the centre of gravity of the gripping portion 23 and an imaginary horizontal line (parallel to the land in conditions of use of the device 1) passing through the centre of gravity of the body 8 can be considered.

As depicted in figures 1 and 2, the support element 18 defines at its central portion a compartment 18V for housing both the first battery 9P and the second battery 9S. To such an end, the support element 18 can comprise a frame projecting from the front surface of the support element 18 to delimit the compartment 18V.

The compartment 18V is advantageously open on two of its faces in order to allow the operator to access such a compartment 18V to perform the battery connection and disconnection operations. Preferably, the accessibility to the compartment 18V is selective, so that the compartment 18V can remain closed, for example during the operation of the device 1, thus protecting the batteries from the intrusion of dirt or dust and thus preventing the batteries from being exposed in the event of rain.

So as to obtain the desired selective accessibility of the compartment 18V, the handlebar 28 further comprises a cover element 29 (advantageously made of plastic material), whose position with respect to the compartment 18V can be switched between a work position, in which the cover element 29 partially delimits the compartment 18V (thus preventing the operator from accessing the compartment 18V), and a service position, in which the cover element 29 is moved away from the compartment 18V and thus does not contribute to the delimitation of the compartment 18V (to which the operator can consequently have access). In the work position the batteries are thus enclosed within the compartment 18V between the cover element 29 and the support element 18, while in the service position the cover element 29 does not create any impediment to the removal of the batteries. The cover element 29 can advantageously be applied to the support element 18 and supported by the support element 18. The cover element 29 can have an edge which, in the work position of the cover element 29, comes into abutment with the edge of the frame of the support element 18 delimiting the compartment 18V.

In the first embodiment of the present invention referred to in figures 1 and 2, the cover element 29 is hinged to the support element 18, advantageously at one of the sides which define the compartment 18V (for example at an upper side of the compartment 18V). The cover element 29 is thus provided with a rotational degree of freedom which allows the operator to determine both the switching from the work position to the service position, and the switching from the service position to the work position. In an embodiment, a mechanical lock can be included between the cover element 29 and the support element 18, which is adapted to hold the cover element 29 in the closed position and manually deactivatable by the operator (for example by means of unlocking button or unlocking lever or key) in order to then lead the cover element 29 from the work position to the service position. According to the depiction shown in figures 1 and 2, the support element 18, in the rear closing wall of the compartment 18V and in particular near the upper side of the compartment 18V, comprises two section openings, for example quadrangular, and the cover element 29 comprises two folded appendages (advantageously obtained in a single body with the cover element 29) which are inserted in the aforesaid openings. The constraint established between the support element 18 and the cover element 29 by means of the openings and the appendages is such that the cover element 29 is exclusively allowed to rotate around the axis defined by the line joining the centres of the openings. The configuration depicted in figures 1 and 2 with openings made in a wall of the compartment 18V and folded appendages of the cover element 29 inserted in the openings has the advantage of allowing the disengagement of the cover element 29 from the support element 18, for example when the operator intends to perform an accurate operation of the cover element 29. However, the invention is indeed not to be understood as limited in such a regard, since alternative configurations can be included to allow the cover element 29 to be rotated with respect to the support element. For example, a pin can be mounted on the support element 18 and the cover element 29 can comprise a pair of hinges for the rotation of the cover element 29 around the pin, a contrast spring advantageously operating between one of the hinges and the pin, intended to force the cover element 29 into the work position.

The compartment 18V, in addition to housing the first battery 9P and the second battery 9S, can host user interface means associated with the batteries, for example a safety key or a switch for activating and deactivating the electrical circuit of the device 1 or a selector for activating a management program of the device 1 intended to maximize the autonomy time of the batteries or a display configured to make at least one piece of information related to the charge level of the first battery 9P and at least one piece of information related to the charge level of the second battery 9S explicit. It should be noted that, in an alternate embodiment of the present invention, at least one of the safety key, the safety switch, the energy efficiency program selector and the display is associated (instead of the compartment 18V) with the user interface arranged near the gripping portion 23.

Figures 3 and 4 axonometrically show a mobile grass cutting device 2 depicting a second embodiment of the present invention. The device 2 is of the walk behind mower type and uses a pair of front wheels and a pair of rear wheels for the pushed advancement. The body 8 of the device 2 comprises a frame (advantageously made of metallic material), to which the wheels 10 are rotatably connected and to which a body (advantageously made of plastic material) is fastened. The body houses an electric motor and a payload therein. Such components of the device 2 are known per se and are not depicted in the figures as the present invention is independent of the type of electric motor and payload (cutting member) installed in the device 2. With regard in particular to the payload, or the component of the device 1 which cuts the grass, it is intended to specify that the device 2 can comprise a cutting member such as, for example, a rotating blade or a head with cutting wires.

The device 2 according to the second embodiment of the invention (depicted in figures 3 and 4) comprises a handlebar 28 whose features coincide with the features of the handlebar 28 of the device 1 according to the first embodiment of the invention. For the features of the handlebar 28 of the device 2 according to the second embodiment of the invention, reference is therefore made to the previous detailed description of the features of the handlebar 28 of the device 1 according to the first embodiment of the invention.

Distinguishing with respect to the handlebar 28 of the device 1 according to the first embodiment of the invention, it should be noted that, in the handlebar 28 of the device 2 according to the second embodiment of the invention, the first longitudinal element and the second longitudinal element belong to a single rod in internally hollow metallic material, such a rod having an inverted-U shape, so that the structure of the handlebar 28 is even more robust. Then, in addition to the operator presence lever, there is also a traction coupling lever (arranged in the rear with respect to the gripping portion 23), or a lever which, when pressed by the operator, allows the traction to be coupled to the wheels 10 and consequently to advance the device 2. Finally, it should be noted that the fastening of the handlebar 28 to the body 8 occurs at the frame, the latter being for this purpose provided with an inverted U-shaped rear anchoring portion. For the fastening of the first longitudinal element and the second longitudinal element, connector members similar to the first connector member 20P and the second connector member 20S described above can be used, or with a pair of threaded tightening pins for the connection between the frame rods and the handlebar 28 and with a pair of locking levers each having an effect on the respective threaded tightening pin.

Figures 5 to 7 axonometrically show a mobile grass cutting device 3 depicting a third embodiment of the present invention. The device 3 according to the third embodiment of the present invention is still of the walk behind mower type, but differs from the device 2 according to the second embodiment of the present invention in that it further comprises a bag 7 for collecting the cut grass. Such a bag 7 is selectively engageable with the body 8, so that the operator is given the ability to keep the bag 7 in the device 1 (to cut the grass in collection mode) or to remove the bag 7 from the device 1 (to cut the grass in mulching mode). The bag 7 can be connected to the body by means of a tunnel capable of allowing the grass cut by the payload to be conveyed inside the bag 7 for the purpose of its collection.

In the depiction provided by way of non-limiting explanation in figures 5 to 7, the upper wall of the bag 7 is formed by a rigid cover (which is preferably made of plastic material), so that a greater strength is given to the structure of the bag 7 and so that the device 3 has an effective protection element, capable of prevent any objects collected by the device 3 from being hurled away by the device 3.

Furthermore, the bag 7 can comprise a handle 77 adapted to be used by the operator as a gripping element and thus to facilitate operations such as removing the bag 7 from the device 3, transporting and handling the bag 7 for the purpose of unloading the collected cut grass and reintegrating the bag 7 in the device 3. Preferably, the handle 77 of the bag 7 is integral with the rigid cover of the bag 7. Even more preferably, the handle 77 of the bag 7 is made in a single body with the rigid cover of the bag 7. According to a possible configuration, the handle 77 is a longitudinally extended element.

The device 3 according to the third embodiment of the invention (depicted in figures 5 to 7) comprises a handlebar 28 whose features coincide with the features of the handlebar 28 of the device 2 according to the second embodiment of the invention, the features of the handlebar 28 of the device 2 according to the second embodiment of the invention, in turn following the features of the handlebar 28 of the device 1 according to the first embodiment of the invention. For the features of the handlebar 28 of the device 2 according to the second embodiment of the invention, in turn following the features of the handlebar 28 of the device 1 according to the first embodiment of the invention. For the features of the handlebar 28 of the device 3 according to the third embodiment of the invention, reference is therefore made to the previous detailed descriptions of the features of the handlebar 28 of the device 1 according to the first embodiment of the invention and of the handlebar 28 of the device 2 according to the second embodiment of the invention.

Distinguishing with respect to the handlebar 28 of the device 2 according to the second embodiment of the invention, it should be noted that, in the handlebar 28 of the device 3 according to the third embodiment of the invention, the cover element 29 adapted to ensure the selective accessibility to the compartment 18V is of the type which can be unhooked with respect to the support element 18 (instead of being hinged to the support element 18). Therefore, by virtue of suitable releasable hooking means operating between the cover element 29 and the support element 18, the cover element 29 can be switched between the work position, in which the first battery 9P and the second battery 9S are enclosed within the compartment 18V (or between the cover element 29 and the support element 18) and the service position, in which the cover element 29 does not contribute to the definition of the compartment 18V, so that the first battery 9P and the second battery 9S can be removed from the compartment 18V (in particular to perform a recharging operation thereof). Given the configuration of the cover element 29 according to the third embodiment of the invention referred to in figures 5 to 7, the switching between the work position and the service position occurs by means of a separation of the cover element 29 from the remaining components of the device 3, in particular from the support element 18. As a further distinction of the device 3 according to the third embodiment of the present invention with respect to the device 2 according to the second embodiment of the present invention, it should be noted that, to avoid causing any interference with the bag 7, the fastening of the handlebar 28 to the body 8 occurs by means of a pair of rear anchoring arms having opposite ends connected, for example by means of screws, respectively to the body 8 (in particular to the frame) and to the first longitudinal element of the handlebar 28 or to the second longitudinal element of the handlebar 28.

Figures 8 and 9 axonometrically show a mobile grass cutting device 4 depicting a non-claimed example of a mobile device. The device 4 is of the hover mower type and differs from the device 1 according to the first embodiment of the invention for a different configuration of the handlebar 28. The remaining components of the device 4 according to the non-claimed example (in particular the body 8 comprising the body for housing the electric motor, impeller and payload) coincide with the components of the device 1 according to the first embodiment of the present invention.

The handlebar 28 of the device 4 according to the example comprises a single longitudinal element 28V, made in particular by means of a rod made of internally hollow metallic material. The longitudinal element 28V is constrained to the body 8, preferably at one end thereof. In an example, the constraint between the longitudinal element 28V and the body 8 is established by means of an anchoring element 85 configured to anchor the longitudinal element 28V to two opposite regions of the body 8, for example to a left lateral region and to a right lateral region of the body 8. In particular, the anchoring element 85 of the handlebar 28 is pivoted or screwed to the body 8 at the lateral regions of the body 8, it being possible for the operator to adjust the inclination of the handlebar 28, so as to allow it to have the desired driving comfort. To avoid obstructing the adjustment of the handlebar 28 to the preferred inclination, the lateral regions of the body 8 have concavities.

The anchoring element 85 can advantageously have an inverted Y-shape and can be formed by joining rods in internally hollow metallic material, for example by welding a first inverted U-shaped rod with a second straight rod. The anchoring element 85 can be made in a single piece with the longitudinal element 28V or can form a distinct component of the handlebar 28 from the longitudinal element 28V, in which case the handlebar 28 can further comprise a joint 85V for the connection between the anchoring element 85 and the longitudinal element 28V.

The handlebar 28 of the device 4 further comprises a grasping element 48 arranged at the end of the longitudinal element 28V opposite the end of the latter constrained to the body 8, or at the end of the latter constrained to the anchoring element 85. The grasping element 48, advantageously made of plastic and connected to the longitudinal element 28V by means of mechanical joints or screws, is configured to allow the standing operator to manually drive the device 4. To such an end, the grasping element 48 comprises a grip 49, arranged at the end of the grasping element 48 opposite the end connected to the longitudinal element 28V and configured to be grasped with one hand by the operator. In the depiction of figures 8 and 9, the grasping element 48 advantageously also comprises an auxiliary grip 54 (arranged near the end of the grasping element 48 connected to the longitudinal element 28) which, being able to be grasped by the operator with the hand not engaged to the grip 49, facilitates a more comfortable and precise operation of the device 4. The grasping element 48 can comprise further elements with respect to those depicted in figures 8 and 9, in particular a user interface and a deflector intended to protect the operator's face from any objects hurled by the device 4, in particular by the payload.

The grasping element 48 is configured to allow the battery 9 to be applied to the handlebar 28 at the grasping element 48. It is indeed a peculiar feature of the device 4 that the battery 9 is supported by the grasping element 48 of the handlebar 28. Therefore, the grasping element 48 has means for making a mechanical connection and an electrical connection with the battery 9 which are of the releasable type. In order to ensure a particularly compact shape of the handlebar 28, the battery 9 is arranged near the grip 49, being in particular applied at a face of the grasping element contiguous to the grip 49. So as to then ensure that the battery 9 is parked in a protected position, in particular not exposed to rain, the face to which the battery 9 is applied is a lower face of the grasping element 48 of the handlebar 28, or a face facing the land.

### Benefits of the invention

From the above description it can easily be seen that the present invention is able to fully achieve, in all embodiments in which the invention can be articulated, the objectives underlying it, in particular overcoming the critical issues found in the mobile grass cutting device described in patent application US2021/0112710A1 and in the mobile grass cutting device Stiga Collector 543 AE Kit.

In fact, the present invention allows a significant lightening of the body of the mobile device for cutting grass, the function of housing the batteries no longer being assigned to the body. When the mobile grass cutting device is in particular of the hover mower type, this results in an improvement of the floating effect, as well as a reduction of the electrical power necessary to obtain such a floating effect. Furthermore, such lightening corresponds to a concomitant limiting of the overall dimensions of the body, with consequent increased visibility, for the operator driving the device, of the area in front of the device, so that the operator (regardless of whether the device is of the hover mower type or walk behind mower type) can easily notice any obstacles which can interfere with the advancement of the device. Above all, the present invention allows to achieve a device for cutting grass characterized by an improved distribution of the weights thereof. In fact, since the batteries are moved from the body to the handlebar and since the batteries significantly contribute to the overall weight of the device, a much more homogeneous weight distribution is obtained, which makes it much easier to drive and manoeuvre the device. Furthermore, since the centre of gravity is close to the gripping portion (in the first to third embodiments) or to the grip (in the fourth embodiment), the moment of the weight force which the operator must bear is lower, so that the operation of the device is less tiring.

Further, the present invention, in all of its embodiments, has the advantage of ensuring considerable ergonomics with respect to the battery removal and battery repositioning operations. In fact, the batteries are located in easily accessible positions and at optimal heights with respect to the land. With regard to the increased ergonomics of the device determined by the positioning of the batteries on the handlebar, it should be noted that (in the third embodiment of the present invention) such an increase in ergonomics is not to the detriment of the accessibility of the collection bag, which remains optimal.

The device according to the present invention also ensures adequate protection of the batteries from dirt, dust and rain, is competitive from the point of view of time and production costs and is also capable of ensuring a considerable ease of any technical assistance interventions.

Compared in particular with the device described by US5,551,220, the device according to the present invention denotes a surprising improvement with regard to the comfort of the manual driving of the device, since the application of the batteries to the portion of the handlebar adjacent to the body (and therefore at a low height with respect to the land) significantly increases the handling and manoeuvrability of the device. The advantages of the invention related to driving comfort are particularly appreciated in the embodiment in which the device is of the hover mower type, since the operator senses the device as significantly lighter to support and as definitely easier to drive.

## Claims (Claims for the following Contracting State(s): AT, BE, CH, DK, ES, FR, GB, GR, IT, LI, LU, NL, SE, MC, PT, IE, SI, LT, LV, FI, RO, MK, CY, AL, TR, BG, CZ, EE, HU, PL, SK, HR, IS, MT, NO, RS, SM)

1. Mobile device (1; 2; 3) for cutting grass comprising:
- at least one payload configured to perform grass cutting operations,
- a body (8) configured to enclose said payload,
- a handlebar (28) extending from said body (8) and configured to allow to manually drive said device (1; 2; 3) with the driver on foot,
- an electric motor coupled to said payload and configured to determine the activation of said payload and
- at least one battery (9P, 9S) electrically connected to said electric motor and configured to power said electric motor,
wherein said handlebar (28) comprises:
- a first longitudinal element extending from a first region of said body (8),
- a second longitudinal element extending from a second region of said body (8),
- a support element (18) extending between said first longitudinal element and said second longitudinal element along a direction transverse to the directions along which said first longitudinal element and said second longitudinal element extend and
- a connecting element engaged to said first longitudinal element and to said second longitudinal element,
wherein said at least one battery (9P, 9S) is applied to said support element (18) and/or supported by said support element (18),
wherein said connecting element comprises a gripping portion (23) configured to be grasped for the purpose of manually driving said device (1; 2; 3),
wherein said support element (18) comprises:
- a first lateral engagement portion (18P) to said first longitudinal element,
- a second lateral engagement portion (18S) to said second longitudinal element and
- a central portion interposed between said first lateral portion (18P) and said second lateral portion (18S),
wherein said first lateral portion (18P), said second lateral portion (18S) and said central portion extend seamlessly,
wherein a compartment (18V) configured to house said at least one battery (9P, 9S) is obtained in said central portion,
wherein said at least one battery (9P, 9S) is of the rechargeable type, and
wherein said at least one battery (9P, 9S) and said handlebar (28) comprise respective electrical and mechanical connection means,
the mobile device (1; 2; 3) being **characterised in that** said at least one battery (9P, 9S) is of the removable type, and
**in that** the distance between said support element (18) and said body (8) is less than the distance between said gripping portion (23) and said support element (18).

2. Device (1; 2; 3) according to claim 1, comprising a plurality of batteries, in particular a pair of batteries (9P, 9S), wherein each of said batteries is electrically connected to said electric motor and is applied to said handlebar (28) and/or supported by said handlebar (28).

3. Device (1; 2; 3) according to claim 1 or claim 2, wherein said first region and said second region are regions of said body (8) opposite each other with respect to a plane of symmetry of said device (1; 2; 3), said first longitudinal element and said second longitudinal element being parallel to each other.

4. Device (1; 2; 3) according to any one of claims 1 to 3, wherein said support element (18) extends between said first longitudinal element and said second longitudinal element along a direction orthogonal to the directions along which said first longitudinal element and said second longitudinal element extend.

5. Device (1; 2; 3) according to any one of claims 1 to 4, wherein the ratio of the distance between said support element (18) and said body (8) and the distance between said gripping portion (23) and said body (8) is between 0.05 and 0.45.

6. Device (1; 2; 3) according to claim 5, wherein the ratio of the distance between said support element (18) and said body (8) and the distance between said gripping portion (23) and said body (8) is between 0.05 and 0.35.

7. Device (1; 2; 3) according to claim 6, wherein the ratio of the distance between said support element (18) and said body (8) and the distance between said gripping portion (23) and said body (8) is between 0.05 and 0.3.

8. Device (1; 2; 3) according to any one of claims 1 to 7, wherein said first longitudinal element is made in a single piece and said second longitudinal element is made in a single piece.

9. Device (1; 2; 3) according to any one of claims 1 to 7, wherein said first longitudinal element is made in a plurality of pieces assembled together and/or said second longitudinal element is made in a plurality of pieces assembled together, wherein at least a first piece and a second piece of said plurality of pieces are connected together by means of a connector member (20P, 20S) configured to assume:
- a work condition, whereby said first piece is rigidly connected to said second piece and
- a transport and/or adjustment condition, in which said first piece is rotatable with respect to said second piece or translatable with respect to said second piece or detachable from said second piece.

10. Device (1; 2; 3) according to any one of claims 1 to 9, wherein said handlebar (28) further comprises a cover element (29) applied to said support element (18) and configured to determine a selective closure of said compartment (18V), wherein said cover element (29) is hinged to said support element (18) or coupled to said support element (18), so as to be able to be switched between:
- a work position, in which said cover element (29) partially delimits said compartment (18V), so as to allow in particular said at least one battery (9P, 9S) to remain enclosed between said support element (18) and said cover element (29), and
- a service position, in which said cover element (29) is rotated with respect to said support element (18) or released from said support element (18) so as to allow in particular said at least one battery (9P, 9S) to be inserted in said compartment (18V) or removed from said compartment (18V).

11. Device (1; 2; 3) according to any one of claims 1 to 10, further comprising a bag (7) selectively engageable to said body (8) and configured to allow the cut grass to be collected by means of said payload, said bag (7) being positioned below said handlebar (28) and comprising a handle (77) arranged at the wall of said bag (7) facing said handlebar (28), said handle (77) being configured to allow the removal of said bag (7) for the purpose of unloading the cut grass or for a cutting operation in mulching mode, in which said support element (18) is arranged at a distance with respect to said bag (7) and/or with respect to said handle (77) such as to allow a hand or arm to easily access said handle (77) for the purpose of removing said bag (7).

12. Device (1; 2; 3) according to any one of claims 1 to 11, wherein said handlebar (28) further comprises:
- at least one switch or at least one key lock configured to connect and/or disconnect said at least one battery (9P, 9S) from said electric motor and
- at least one light or a screen configured to make at least one piece of information related to the charge level of said at least one battery (9P, 9S) explicit.

13. Device (1; 2; 3) according to any one of claims 1 to 12, further comprising a control unit operatively connected to said at least one battery (9P, 9S) and to said electric motor, wherein said control unit is configured to run a management algorithm of said device (1; 2; 3) suitable for maximizing the duration of the charge state of said at least one battery (9P, 9S).

14. Device (1; 2; 3) according to any one of claims 1 to 13, wherein said device (1; 2; 3) is of the hover mower type.

15. Device (1; 2; 3) according to any one of claims 1 to 13, wherein said device (1; 2; 3) is of the walk behind mower type.

## Claims (Claims for the following Contracting State(s): DE)

1. Mobile device (1; 2; 3) for cutting grass comprising:
- at least one payload configured to perform grass cutting operations,
- a body (8) configured to enclose said payload,
- a handlebar (28) extending from said body (8) and configured to allow to manually drive said device (1; 2; 3) with the driver on foot,
- an electric motor coupled to said payload and configured to determine the activation of said payload and
- at least one battery (9P, 9S) electrically connected to said electric motor and configured to power said electric motor,
wherein said handlebar (28) comprises:
- a first longitudinal element extending from a first region of said body (8),
- a second longitudinal element extending from a second region of said body (8),
- a support element (18) extending between said first longitudinal element and said second longitudinal element along a direction transverse to the directions along which said first longitudinal element and said second longitudinal element extend and
- a connecting element engaged to said first longitudinal element and to said second longitudinal element,
wherein said at least one battery (9P, 9S) is applied to said support element (18) and/or supported by said support element (18),
wherein said connecting element comprises a gripping portion (23) configured to be grasped for the purpose of manually driving said device (1; 2; 3),
wherein said support element (18) comprises:
- a first lateral engagement portion (18P) to said first longitudinal element,
- a second lateral engagement portion (18S) to said second longitudinal element and
- a central portion interposed between said first lateral portion (18P) and said second lateral portion (18S),
wherein said first lateral portion (18P), said second lateral portion (18S) and said central portion extend seamlessly,
wherein a compartment (18V) configured to house said at least one battery (9P, 9S) is obtained in said central portion,
wherein said at least one battery (9P, 9S) is of the rechargeable type, and
wherein said at least one battery (9P, 9S) and said handlebar (28) comprise respective electrical and mechanical connection means,
the mobile device (1; 2; 3) being **characterised in that** said at least one battery (9P, 9S) is of the removable type, and
**in that** the distance between said support element (18) and said body (8) is less than the distance between said gripping portion (23) and said support element (18), the value of the ratio of the distance between said support element (18) and said body (8) and the distance between said gripping portion (23) and said body (8) being about 0.45 or about 0.44 or about 0.43 or about 0.42 or about 0.41 or about 0.4 or about 0.39 or about 0.38 or about 0.37 or about 0.36 or about 0.35 or about 0.34 or about 0.33 or about 0.32 or about 0.31 or about 0.3 or about 0.29 or about 0.28 or about 0.27 or about 0.26 or about 0.25 or about 0.24 or about 0.23 or about 0.22 or about 0.21 or about 0.2 or about 0.19 or about 0.18 or about 0.17 or about 0.16 or about 0.15 or about 0.14 or about 0.13 or about 0.12 or about 0.11 or about 0.1 or about 0.09 or about 0.08 or about 0.07 or about 0.06 or about 0.05.

2. Device (1; 2; 3) according to claim 1, comprising a plurality of batteries, in particular a pair of batteries (9P, 9S), wherein each of said batteries is electrically connected to said electric motor and is applied to said handlebar (28) and/or supported by said handlebar (28).

3. Device (1; 2; 3) according to claim 1 or claim 2, wherein said first region and said second region are regions of said body (8) opposite each other with respect to a plane of symmetry of said device (1; 2; 3), said first longitudinal element and said second longitudinal element being parallel to each other.

4. Device (1; 2; 3) according to any one of claims 1 to 3, wherein said support element (18) extends between said first longitudinal element and said second longitudinal element along a direction orthogonal to the directions along which said first longitudinal element and said second longitudinal element extend.

5. Device (1; 2; 3) according to any one of claims 1 to 4, wherein said first longitudinal element is made in a single piece and said second longitudinal element is made in a single piece.

6. Device (1; 2; 3) according to any one of claims 1 to 4, wherein said first longitudinal element is made in a plurality of pieces assembled together and/or said second longitudinal element is made in a plurality of pieces assembled together, wherein at least a first piece and a second piece of said plurality of pieces are connected together by means of a connector member (20P, 20S) configured to assume:
- a work condition, whereby said first piece is rigidly connected to said second piece and
- a transport and/or adjustment condition, in which said first piece is rotatable with respect to said second piece or translatable with respect to said second piece or detachable from said second piece.

7. Device (1; 2; 3) according to any one of claims 1 to 6, wherein said handlebar (28) further comprises a cover element (29) applied to said support element (18) and configured to determine a selective closure of said compartment (18V), wherein said cover element (29) is hinged to said support element (18) or coupled to said support element (18), so as to be able to be switched between:
- a work position, in which said cover element (29) partially delimits said compartment (18V), so as to allow in particular said at least one battery (9P, 9S) to remain enclosed between said support element (18) and said cover element (29), and
- a service position, in which said cover element (29) is rotated with respect to said support element (18) or released from said support element (18) so as to allow in particular said at least one battery (9P, 9S) to be inserted in said compartment (18V) or removed from said compartment (18V).

8. Device (1; 2; 3) according to any one of claims 1 to 7, further comprising a bag (7) selectively engageable to said body (8) and configured to allow the cut grass to be collected by means of said payload, said bag (7) being positioned below said handlebar (28) and comprising a handle (77) arranged at the wall of said bag (7) facing said handlebar (28), said handle (77) being configured to allow the removal of said bag (7) for the purpose of unloading the cut grass or for a cutting operation in mulching mode, in which said support element (18) is arranged at a distance with respect to said bag (7) and/or with respect to said handle (77) such as to allow a hand or arm to easily access said handle (77) for the purpose of removing said bag (7).

9. Device (1; 2; 3) according to any one of claims 1 to 8, wherein said handlebar (28) further comprises:
- at least one switch or at least one key lock configured to connect and/or disconnect said at least one battery (9P, 9S) from said electric motor and
- at least one light or a screen configured to make at least one piece of information related to the charge level of said at least one battery (9P, 9S) explicit.

10. Device (1; 2; 3) according to any one of claims 1 to 9, further comprising a control unit operatively connected to said at least one battery (9P, 9S) and to said electric motor, wherein said control unit is configured to run a management algorithm of said device (1; 2; 3) suitable for maximizing the duration of the charge state of said at least one battery (9P, 9S).

11. Device (1; 2; 3) according to any one of claims 1 to 10, wherein said device (1; 2; 3) is of the hover mower type.

12. Device (1; 2; 3) according to any one of claims 1 to 10, wherein said device (1; 2; 3) is of the walk behind mower type.

## Patentansprüche (Patentansprüche für folgende(n) Vertragsstaat(en): AT, BE, CH, DK, ES, FR, GB, GR, IT, LI, LU, NL, SE, MC, PT, IE, SI, LT, LV, FI, RO, MK, CY, AL, TR, BG, CZ, EE, HU, PL, SK, HR, IS, MT, NO, RS, SM)

1. Mobile Vorrichtung (1; 2; 3) zum Schneiden von Gras, umfassend:
- wenigstens eine Nutzeinheit, welche dazu eingerichtet ist, Grasschneidevorgänge durchzuführen,
- einen Körper (8), welcher dazu eingerichtet ist, die Nutzeinheit zu umschließen,
- einen Lenker (28), welcher sich von dem Körper (8) erstreckt und dazu eingerichtet ist, ein manuelles Führen der Vorrichtung (1; 2; 3) durch einen zu Fuß gehenden Bediener zu ermöglichen,
- einen elektrischen Motor, welcher mit der Nutzeinheit gekoppelt ist und dazu eingerichtet ist, die Aktivierung der Nutzeinheit zu bestimmen, und
- wenigstens eine Batterie (9P, 9S), welche elektrisch mit dem elektrischen Motor verbunden ist und dazu eingerichtet ist, den elektrischen Motor mit Strom zu versorgen,
wobei der Lenker (28) umfasst:
- ein erstes Längselement, welches sich von einem ersten Bereich des Körpers (8) erstreckt,
- ein zweites Längselement, welches sich von einem zweiten Bereich des Körpers (8) erstreckt,
- ein Halterungselement (18), welches sich zwischen dem ersten Längselement und dem zweiten Längselement entlang einer Richtung erstreckt, welche quer zu den Richtungen verläuft, entlang welcher sich das erste Längselement und das zweite Längselement erstrecken, und
- ein Verbindungselement, welches in das erste Längselement und in das zweite Längselement eingreift,
wobei die wenigstens eine Batterie (9P, 9S) an dem Halterungselement (18) angebracht ist und/oder von dem Halterungselement (18) gehaltert wird,
wobei das Verbindungselement einen Griffabschnitt (23) umfasst, welcher dazu eingerichtet ist, zum Zweck eines manuellen Führens der Vorrichtung (1; 2; 3) ergriffen zu werden,
wobei das Halterungselement (18) umfasst:
- einen ersten seitlichen Eingriffsabschnitt (18P) zum Eingriff mit dem ersten Längselement,
- einen zweiten seitlichen Eingriffsabschnitt (18S) zum Eingriff mit dem zweiten Längselement und
- einen Mittelabschnitt, welcher zwischen dem ersten seitlichen Abschnitt (18P) und dem zweiten seitlichen Abschnitt (18S) angeordnet ist,
wobei sich der erste seitliche Abschnitt (18P), der zweite seitliche Abschnitt (18S) und der Mittelabschnitt nahtlos erstrecken,
wobei ein Fach (18V), das dazu eingerichtet ist, die wenigstens eine Batterie (9P, 9S) aufzunehmen, in dem Mittelabschnitt ausgebildet ist,
wobei die wenigstens eine Batterie (9P, 9S) von dem wiederaufladbaren Typ ist, und
wobei die wenigstens eine Batterie (9P, 9S) und der Lenker (28) jeweilige elektrische und mechanische Verbindungsmittel umfassen,
wobei die mobile Vorrichtung (1; 2; 3) **dadurch gekennzeichnet ist, dass** die wenigstens eine Batterie (9P, 9S) von dem herausnehmbaren Typ ist, und
**dadurch,** dass der Abstand zwischen dem Halterungselement (18) und dem Körper (8) kleiner ist als der Abstand zwischen dem Griffabschnitt (23) und dem Halterungselement (18).

2. Vorrichtung (1; 2; 3) nach Anspruch 1, umfassend eine Mehrzahl von Batterien, insbesondere ein Paar von Batterien (9P, 9S), wobei jede der Batterien elektrisch mit dem elektrischen Motor verbunden ist und an dem Lenker (28) angebracht ist und/oder von dem Lenker (28) gehaltert wird.

3. Vorrichtung (1; 2; 3) nach Anspruch 1 oder Anspruch 2, wobei der erste Bereich und der zweite Bereich Bereiche des Körpers (8) sind, welche einander in Bezug auf eine Symmetrieebene der Vorrichtung (1; 2; 3) gegenüberliegen, wobei das erste Längselement und das zweite Längselement parallel zueinander verlaufen.

4. Vorrichtung (1; 2; 3) nach einem der Ansprüche 1 bis 3, wobei sich das Halterungselement (18) zwischen dem ersten Längselement und dem zweiten Längselement entlang einer Richtung erstreckt, welche orthogonal zu den Richtungen ist, entlang welcher sich das erste Längselement und das zweite Längselement erstrecken.

5. Vorrichtung (1; 2; 3) nach einem der Ansprüche 1 bis 4, wobei das Verhältnis zwischen dem Abstand zwischen dem Halterungselement (18) und dem Körper (8) und dem Abstand zwischen dem Griffabschnitt (23) und dem Körper (8) zwischen 0,05 und 0,45 liegt.

6. Vorrichtung (1; 2; 3) nach Anspruch 5, wobei das Verhältnis zwischen dem Abstand zwischen dem Halterungselement (18) und dem Körper (8) und dem Abstand zwischen dem Griffabschnitt (23) und dem Körper (8) zwischen 0,05 und 0,35 liegt.

7. Vorrichtung (1; 2; 3) nach Anspruch 6, wobei das Verhältnis zwischen dem Abstand zwischen dem Halterungselement (18) und dem Körper (8) und dem Abstand zwischen dem Griffabschnitt (23) und dem Körper (8) zwischen 0,05 und 0,3 liegt.

8. Vorrichtung (1; 2; 3) nach einem der Ansprüche 1 bis 7, wobei das erste Längselement einstückig ausgeführt ist und das zweite Längselement einstückig ausgeführt ist.

9. Vorrichtung (1; 2; 3) nach einem der Ansprüche 1 bis 7, wobei das erste Längselement aus einer Mehrzahl von zusammengesetzten Teilen gefertigt ist und/oder das zweite Längselement aus einer Mehrzahl von zusammengesetzten Teilen gefertigt ist, wobei wenigstens ein erstes Teil und ein zweites Teil der Mehrzahl von Teilen mittels eines Verbindungseinheitselements (20P, 20S) miteinander verbunden sind, welches dazu eingerichtet ist, folgende Zustände anzunehmen:
- einen Arbeitszustand, in welchem das erste Teil starr mit dem zweiten Teil verbunden ist, und
- einen Transport- und/oder Einstellzustand, in welchem das erste Teil in Bezug auf das zweite Teil drehbar ist oder in Bezug auf das zweite Teil verschiebbar ist oder von dem zweiten Teil lösbar ist.

10. Vorrichtung (1; 2; 3) nach einem der Ansprüche 1 bis 9, wobei der Lenker (28) ferner ein Abdeckelement (29) umfasst, welches an dem Halterungselement (18) angebracht ist und dazu eingerichtet ist, einen selektiven Verschluss des Fachs (18V) zu bestimmen, wobei das Abdeckelement (29) an dem Halterungselement (18) angelenkt oder mit dem Halterungselement (18) gekoppelt ist, so dass das Abdeckelement (29) zwischen den folgenden Positionen umschaltbar ist:
- einer Arbeitsposition, in welcher das Abdeckelement (29) das Fach (18V) teilweise begrenzt, um zu ermöglichen, dass insbesondere die wenigstens eine Batterie (9P, 9S) zwischen dem Halterungselement (18) und dem Abdeckelement (29) eingeschlossen bleibt, und
- einer Serviceposition, in welcher das Abdeckelement (29) in Bezug auf das Halterungselement (18) gedreht oder von dem Halterungselement (18) gelöst ist, um zu ermöglichen, dass insbesondere die wenigstens eine Batterie (9P, 9S) in das Fach (18V) eingesetzt oder aus dem Fach (18V) entnommen wird.

11. Vorrichtung (1; 2; 3) nach einem der Ansprüche 1 bis 10, ferner umfassend einen Fangkorb (7), welcher selektiv mit dem Körper (8) eingreifbar ist und dazu eingerichtet ist, das Sammeln des geschnittenen Grases mittels der Nutzeinheit zu ermöglichen, wobei der Fangkorb (7) unterhalb des Lenkers (28) angeordnet ist und einen Griff (77) umfasst, welcher an der Wand des Fangkorbs (7) angeordnet ist, welche dem Lenker (28) zugewandt ist, wobei der Griff (77) dazu eingerichtet ist, die Entnahme des Fangkorbs (7) zum Zweck des Entleerens des geschnittenen Grases oder für einen Schneidvorgang in einem Mulchbetrieb zu ermöglichen, in welchem das Halterungselement (18) in einem Abstand zu dem Fangkorb (7) und/oder zu dem Griff (77) derart angeordnet ist, dass ermöglicht wird, dass eine Hand oder ein Arm den Griff (77) zum Zweck eines Entnehmens des Fangkorbs (7) leicht erreicht.

12. Vorrichtung (1; 2; 3) nach einem der Ansprüche 1 bis 11, wobei der Lenker (28) ferner umfasst:
- wenigstens einen Schalter oder wenigstens eine Schlüsselverriegelung, welche dazu eingerichtet sind, die wenigstens eine Batterie (9P, 9S) mit dem elektrischen Motor zu verbinden und/oder von dem elektrischen Motor zu trennen, und
- wenigstens eine Leuchte oder eine Anzeige, welche dazu eingerichtet ist, wenigstens eine Information bezüglich des Ladezustands der wenigstens einen Batterie (9P, 9S) hervorzuheben.

13. Vorrichtung (1; 2; 3) nach einem der Ansprüche 1 bis 12, ferner umfassend eine Steuereinheit, welche betriebsmäßig mit der wenigstens einen Batterie (9P, 9S) und mit dem elektrischen Motor verbunden ist, wobei die Steuereinheit dazu eingerichtet ist, einen Verwaltungsalgorithmus der Vorrichtung (1; 2; 3) auszuführen, welcher geeignet ist, die Dauer des Ladezustands der wenigstens einen Batterie (9P, 9S) zu maximieren.

14. Vorrichtung (1; 2; 3) nach einem der Ansprüche 1 bis 13, wobei die Vorrichtung (1; 2; 3) von Typ eines Luftkissenmähers ist.

15. Vorrichtung (1; 2; 3) nach einem der Ansprüche 1 bis 13, wobei die Vorrichtung (1; 2; 3) von Typ eines handgeführten Mähers ist.

## Patentansprüche (Patentansprüche für folgende(n) Vertragsstaat(en): DE)

1. Mobile Vorrichtung (1; 2; 3) zum Schneiden von Gras, umfassend:
- wenigstens eine Nutzeinheit, welche dazu eingerichtet ist, Grasschneidevorgänge durchzuführen,
- einen Körper (8), welcher dazu eingerichtet ist, die Nutzeinheit zu umschließen,
- einen Lenker (28), welcher sich von dem Körper (8) erstreckt und dazu eingerichtet ist, ein manuelles Führen der Vorrichtung (1; 2; 3) durch einen zu Fuß gehenden Bediener zu ermöglichen,
- einen elektrischen Motor, welcher mit der Nutzeinheit gekoppelt ist und dazu eingerichtet ist, die Aktivierung der Nutzeinheit zu bestimmen, und
- wenigstens eine Batterie (9P, 9S), welche elektrisch mit dem elektrischen Motor verbunden ist und dazu eingerichtet ist, den elektrischen Motor mit Strom zu versorgen,
wobei der Lenker (28) umfasst:
- ein erstes Längselement, welches sich von einem ersten Bereich des Körpers (8) erstreckt,
- ein zweites Längselement, welches sich von einem zweiten Bereich des Körpers (8) erstreckt,
- ein Halterungselement (18), welches sich zwischen dem ersten Längselement und dem zweiten Längselement entlang einer Richtung erstreckt, welche quer zu den Richtungen verläuft, entlang welcher sich das erste Längselement und das zweite Längselement erstrecken, und
- ein Verbindungselement, welches in das erste Längselement und in das zweite Längselement eingreift,
wobei die wenigstens eine Batterie (9P, 9S) an dem Halterungselement (18) angebracht ist und/oder von dem Halterungselement (18) gehaltert wird,
wobei das Verbindungselement einen Griffabschnitt (23) umfasst, welcher dazu eingerichtet ist, zum Zweck eines manuellen Führens der Vorrichtung (1; 2; 3) ergriffen zu werden,
wobei das Halterungselement (18) umfasst:
- einen ersten seitlichen Eingriffsabschnitt (18P) zum Eingriff mit dem ersten Längselement,
- einen zweiten seitlichen Eingriffsabschnitt (18S) zum Eingriff mit dem zweiten Längselement und
- einen Mittelabschnitt, welcher zwischen dem ersten seitlichen Abschnitt (18P) und dem zweiten seitlichen Abschnitt (18S) angeordnet ist,
wobei sich der erste seitliche Abschnitt (18P), der zweite seitliche Abschnitt (18S) und der Mittelabschnitt nahtlos erstrecken,
wobei ein Fach (18V), das dazu eingerichtet ist, die wenigstens eine Batterie (9P, 9S) aufzunehmen, in dem Mittelabschnitt ausgebildet ist,
wobei die wenigstens eine Batterie (9P, 9S) von dem wiederaufladbaren Typ ist, und
wobei die wenigstens eine Batterie (9P, 9S) und der Lenker (28) jeweilige elektrische und mechanische Verbindungsmittel umfassen,
wobei die mobile Vorrichtung (1; 2; 3) **dadurch gekennzeichnet ist, dass** die wenigstens eine Batterie (9P, 9S) von dem herausnehmbaren Typ ist, und
**dadurch,** dass der Abstand zwischen dem Halterungselement (18) und dem Körper (8) kleiner ist als der Abstand zwischen dem Griffabschnitt (23) und dem Halterungselement (18), wobei der Wert des Verhältnisses zwischen dem Abstand zwischen dem Halterungselement (18) und dem Körper (8) und dem Abstand zwischen dem Griffabschnitt (23) und dem Körper (8) etwa 0,45 oder etwa 0,44 oder etwa 0,43 oder etwa 0,42 oder etwa 0,41 oder etwa 0,4 oder etwa 0,39 oder etwa 0,38 oder etwa 0,37 oder etwa 0,36 oder etwa 0,35 oder etwa 0,34 oder etwa 0,33 oder etwa 0,32 oder etwa 0,31 oder etwa 0,3 oder etwa 0,29 oder etwa 0,28 oder etwa 0,27 oder etwa 0,26 oder etwa 0,25 oder etwa 0,24 oder etwa 0,23 oder etwa 0,22 oder etwa 0,21 oder etwa 0,2 oder etwa 0,19 oder etwa 0,18 oder etwa 0,17 oder etwa 0,16 oder etwa 0,15 oder etwa 0,14 oder etwa 0,13 oder etwa 0,12 oder etwa 0,11 oder etwa 0,1 oder etwa 0,09 oder etwa 0,08 oder etwa 0,07 oder etwa 0,06 oder etwa 0,05 beträgt.

2. Vorrichtung (1; 2; 3) nach Anspruch 1, umfassend eine Mehrzahl von Batterien, insbesondere ein Paar von Batterien (9P, 9S), wobei jede der Batterien elektrisch mit dem elektrischen Motor verbunden ist und an dem Lenker (28) angebracht ist und/oder von dem Lenker (28) gehaltert wird.

3. Vorrichtung (1; 2; 3) nach Anspruch 1 oder Anspruch 2, wobei der erste Bereich und der zweite Bereich Bereiche des Körpers (8) sind, welche einander in Bezug auf eine Symmetrieebene der Vorrichtung (1; 2; 3) gegenüberliegen, wobei das erste Längselement und das zweite Längselement parallel zueinander verlaufen.

4. Vorrichtung (1; 2; 3) nach einem der Ansprüche 1 bis 3, wobei sich das Halterungselement (18) zwischen dem ersten Längselement und dem zweiten Längselement entlang einer Richtung erstreckt, welche orthogonal zu den Richtungen ist, entlang welcher sich das erste Längselement und das zweite Längselement erstrecken.

5. Vorrichtung (1; 2; 3) nach einem der Ansprüche 1 bis 4, wobei das erste Längselement einstückig ausgeführt ist und das zweite Längselement einstückig ausgeführt ist.

6. Vorrichtung (1; 2; 3) nach einem der Ansprüche 1 bis 4, wobei das erste Längselement aus einer Mehrzahl von zusammengesetzten Teilen gefertigt ist und/oder das zweite Längselement aus einer Mehrzahl von zusammengesetzten Teilen gefertigt ist, wobei wenigstens ein erstes Teil und ein zweites Teil der Mehrzahl von Teilen mittels eines Verbindungseinheitselements (20P, 20S) miteinander verbunden sind, welches dazu eingerichtet ist, folgende Zustände anzunehmen:
- einen Arbeitszustand, in welchem das erste Teil starr mit dem zweiten Teil verbunden ist, und
- einen Transport- und/oder Einstellzustand, in welchem das erste Teil in Bezug auf das zweite Teil drehbar ist oder in Bezug auf das zweite Teil verschiebbar ist oder von dem zweiten Teil lösbar ist.

7. Vorrichtung (1; 2; 3) nach einem der Ansprüche 1 bis 6, wobei der Lenker (28) ferner ein Abdeckelement (29) umfasst, welches an dem Halterungselement (18) angebracht ist und dazu eingerichtet ist, einen selektiven Verschluss des Fachs (18V) zu bestimmen, wobei das Abdeckelement (29) an dem Halterungselement (18) angelenkt oder mit dem Halterungselement (18) gekoppelt ist, so dass das Abdeckelement (29) zwischen den folgenden Positionen umschaltbar ist:
- einer Arbeitsposition, in welcher das Abdeckelement (29) das Fach (18V) teilweise begrenzt, um zu ermöglichen, dass insbesondere die wenigstens eine Batterie (9P, 9S) zwischen dem Halterungselement (18) und dem Abdeckelement (29) eingeschlossen bleibt, und
- einer Serviceposition, in welcher das Abdeckelement (29) in Bezug auf das Halterungselement (18) gedreht oder von dem Halterungselement (18) gelöst ist, um zu ermöglichen, dass insbesondere die wenigstens eine Batterie (9P, 9S) in das Fach (18V) eingeführt oder aus dem Fach (18V) entnommen wird.

8. Vorrichtung (1; 2; 3) nach einem der Ansprüche 1 bis 7, ferner umfassend einen Fangkorb (7), welcher selektiv mit dem Körper (8) eingreifbar ist und dazu eingerichtet ist, das Sammeln des geschnittenen Grases mittels der Nutzeinheit zu ermöglichen, wobei der Fangkorb (7) unterhalb des Lenkers (28) angeordnet ist und einen Griff (77) umfasst, welcher an der Wand des Fangkorbs (7) angeordnet ist, welche dem Lenker (28) zugewandt ist, wobei der Griff (77) dazu eingerichtet ist, die Entnahme des Fangkorbs (7) zum Zweck des Entleerens des geschnittenen Grases oder für einen Schneidvorgang in einem Mulchbetrieb zu ermöglichen, in welchem das Halterungselement (18) in einem Abstand zu dem Fangkorb (7) und/oder zu dem Griff (77) derart angeordnet ist, dass ermöglicht wird, dass eine Hand oder ein Arm den Griff (77) zum Zweck eines Entnehmens des Fangkorbs (7) leicht erreicht.

9. Vorrichtung (1; 2; 3) nach einem der Ansprüche 1 bis 8, wobei der Lenker (28) ferner umfasst:
- wenigstens einen Schalter oder wenigstens eine Schlüsselverriegelung, welche dazu eingerichtet sind, die wenigstens eine Batterie (9P, 9S) mit dem elektrischen Motor zu verbinden und/oder von dem elektrischen Motor zu trennen, und
- wenigstens eine Leuchte oder eine Anzeige, welche dazu eingerichtet ist, wenigstens eine Information bezüglich des Ladezustands der wenigstens einen Batterie (9P, 9S) hervorzuheben.

10. Vorrichtung (1; 2; 3) nach einem der Ansprüche 1 bis 9, ferner umfassend eine Steuereinheit, welche betriebsmäßig mit der wenigstens einen Batterie (9P, 9S) und mit dem elektrischen Motor verbunden ist, wobei die Steuereinheit dazu eingerichtet ist, einen Verwaltungsalgorithmus der Vorrichtung (1; 2; 3) auszuführen, welcher geeignet ist, die Dauer des Ladezustands der wenigstens einen Batterie (9P, 9S) zu maximieren.

11. Vorrichtung (1; 2; 3) nach einem der Ansprüche 1 bis 10, wobei die Vorrichtung (1; 2; 3) von Typ eines Luftkissenmähers ist.

12. Vorrichtung (1; 2; 3) nach einem der Ansprüche 1 bis 10, wobei die Vorrichtung (1; 2; 3) von Typ eines handgeführten Mähers ist.

## Revendications (Revendications pour l'(les) Etat(s) contractant(s) suivant(s): AT, BE, CH, DK, ES, FR, GB, GR, IT, LI, LU, NL, SE, MC, PT, IE, SI, LT, LV, FI, RO, MK, CY, AL, TR, BG, CZ, EE, HU, PL, SK, HR, IS, MT, NO, RS, SM)

1. Dispositif (1 ; 2 ; 3) mobile pour couper de l'herbe comprenant :
- au moins une charge utile configurée pour exécuter des opérations de coupe d'herbe,
- un corps (8) configuré pour enfermer ladite charge utile,
- un guidon (28) s'étendant depuis ledit corps (8) et configuré pour permettre d'entraîner manuellement ledit dispositif (1 ; 2 ; 3) avec le pilote à pied,
- un moteur électrique accouplé à ladite charge utile et configuré pour déterminer l'activation de ladite charge utile et
- au moins une batterie (9P, 9S) électriquement connectée audit moteur électrique et configurée pour alimenter ledit moteur électrique,
dans lequel ledit guidon (28) comprend :
- un premier élément longitudinal s'étendant depuis une première région dudit corps (8),
- un second élément longitudinal s'étendant depuis une seconde région dudit corps (8),
- un élément de support (18) s'étendant entre ledit premier élément longitudinal et ledit second élément longitudinal le long d'une direction transversale aux directions le long desquelles ledit premier élément longitudinal et ledit second élément longitudinal s'étendent et
- un élément de raccordement engagé avec ledit premier élément longitudinal et avec ledit second élément longitudinal,
dans lequel ladite au moins une batterie (9P, 9S) est appliquée audit élément de support (18) et/ou supportée par ledit élément de support (18),
dans lequel ledit élément de raccordement comprend une portion de préhension (23) configurée pour être saisie aux fins d'entraîner manuellement ledit dispositif (1 ; 2 ; 3),
dans lequel ledit élément de support (18) comprend :
- une première portion latérale d'engagement (18P) avec ledit premier élément longitudinal,
- une seconde portion latérale d'engagement (18S) avec ledit second élément longitudinal et
- une portion centrale interposée entre ladite première portion latérale (18P) et ladite seconde portion latérale (18S),
dans lequel ladite première portion latérale (18P), ladite seconde portion latérale (18S) et ladite portion centrale s'étendent de manière continue,
dans lequel un compartiment (18V) configuré pour loger ladite au moins une batterie (9P, 9S) est obtenu dans ladite portion centrale,
dans lequel ladite au moins une batterie (9P, 9S) est du type rechargeable, et
dans lequel ladite au moins une batterie (9P, 9S) et ledit guidon (28) comprennent des moyens de raccordement électriques et mécaniques respectifs,
le dispositif (1 ; 2 ; 3) mobile étant **caractérisé en ce que** ladite au moins une batterie (9P, 9S) est du type amovible, et
**en ce que** la distance entre ledit élément de support (18) et ledit corps (8) est inférieure à la distance entre ladite portion de préhension (23) et ledit élément de support (18).

2. Dispositif (1 ; 2 ; 3) selon la revendication 1, comprenant une pluralité de batteries, en particulier une paire de batteries (9P, 9S), dans lequel chacune desdites batteries est électriquement connectée audit moteur électrique et est appliquée audit guidon (28) et/ou supportée par ledit guidon (28).

3. Dispositif (1 ; 2 ; 3) selon la revendication 1 ou la revendication 2, dans lequel ladite première région et ladite seconde région sont des régions dudit corps (8) opposées l'une à l'autre par rapport à un plan de symétrie dudit dispositif (1 ; 2 ; 3), ledit premier élément longitudinal et ledit second élément longitudinal étant parallèles l'un par rapport à l'autre.

4. Dispositif (1 ; 2 ; 3) selon l'une quelconque des revendications 1 à 3, dans lequel ledit élément de support (18) s'étend entre ledit premier élément longitudinal et ledit second élément longitudinal le long d'une direction orthogonale aux directions le long desquelles ledit premier élément longitudinal et ledit second élément longitudinal s'étendent.

5. Dispositif (1 ; 2 ; 3) selon l'une quelconque des revendications 1 à 4, dans lequel le rapport de la distance entre ledit élément de support (18) et ledit corps (8) et la distance entre ladite portion de préhension (23) et ledit corps (8) est compris entre 0,05 et 0,45.

6. Dispositif (1 ; 2 ; 3) selon la revendication 5, dans lequel le rapport de la distance entre ledit élément de support (18) et ledit corps (8) et la distance entre ladite portion de préhension (23) et ledit corps (8) est compris entre 0,05 et 0,35.

7. Dispositif (1 ; 2 ; 3) selon la revendication 6, dans lequel le rapport de la distance entre ledit élément de support (18) et ledit corps (8) et la distance entre ladite portion de préhension (23) et ledit corps (8) est compris entre 0,05 et 0,3.

8. Dispositif (1 ; 2 ; 3) selon l'une quelconque des revendications 1 à 7, dans lequel ledit premier élément longitudinal est constitué d'une pièce unique et ledit second élément longitudinal est constitué d'une pièce unique.

9. Dispositif (1 ; 2 ; 3) selon l'une quelconque des revendications 1 à 7, dans lequel ledit premier élément longitudinal est constitué d'une pluralité de pièces assemblées ensemble et/ou ledit second élément longitudinal est constitué d'une pluralité de pièces assemblées ensemble, dans lequel au moins une première pièce et une seconde pièce de ladite pluralité de pièces sont raccordées l'une à l'autre à l'aide d'un élément connecteur (20P, 20S) configuré pour prendre :
- un état de travail, dans lequel ladite première pièce est raccordée de manière rigide à ladite seconde pièce et
- un état de transport et/ou d'ajustement, dans lequel ladite première pièce peut tourner par rapport à ladite seconde pièce ou peut effectuer une translation par rapport à ladite seconde pièce ou peut être détachée de ladite seconde pièce.

10. Dispositif (1 ; 2 ; 3) selon l'une quelconque des revendications 1 à 9, dans lequel ledit guidon (28) comprend en outre un élément formant couvercle (29) appliqué audit élément de support (18) et configuré pour déterminer une fermeture sélective dudit compartiment (18V), dans lequel ledit élément formant couvercle (29) est articulé audit élément de support (18) ou accouplé audit élément de support (18), afin d'être capable de passer entre :
- une position de travail, dans laquelle ledit élément formant couvercle (29) délimite partiellement ledit compartiment (18V), afin de permettre en particulier à ladite au moins une batterie (9P, 9S) de demeurer enfermée entre ledit élément de support (18) et ledit élément formant couvercle (29), et
- une position de service, dans laquelle ledit élément formant couvercle (29) tourne par rapport audit élément de support (18) ou est libéré dudit élément de support (18) afin de permettre en particulier à ladite au moins une batterie (9P, 9S) d'être insérée dans ledit compartiment (18V) ou d'être retirée dudit compartiment (18V).

11. Dispositif (1 ; 2 ; 3) selon l'une quelconque des revendications 1 à 10, comprenant en outre un sac (7) pouvant être sélectivement engagé avec ledit corps (8) et configuré pour permettre à l'herbe coupée d'être collectée à l'aide de ladite charge utile, ledit sac (7) étant positionné en dessous dudit guidon (28) et comprenant une poignée (77) agencée au niveau de la paroi dudit sac (7) faisant face audit guidon (28), ladite poignée (77) étant configurée pour permettre le retrait dudit sac (7) aux fins d'évacuer l'herbe coupée ou pour une opération de coupe en mode paillage, dans laquelle ledit élément de support (18) est agencé à une distance dudit sac (7) et/ou de ladite poignée (77) telle qu'elle permet à une main ou à un bras d'accéder facilement à ladite poignée (77) aux fins de retirer ledit sac (7).

12. Dispositif (1 ; 2 ; 3) selon l'une quelconque des revendications 1 à 11, dans lequel ledit guidon (28) comprend en outre :
- au moins un commutateur ou au moins un verrou à clé configuré pour connecter et/ou déconnecter ladite au moins une batterie (9P, 9S) dudit moteur électrique et
- au moins une lumière ou un écran configuré·e pour rendre explicite au moins un élément d'information lié au niveau de charge de ladite au moins une batterie (9P, 9S).

13. Dispositif (1 ; 2 ; 3) selon l'une quelconque des revendications 1 à 12, comprenant en outre une unité de commande fonctionnellement connectée à ladite au moins une batterie (9P, 9S) et audit moteur électrique, dans lequel ladite unité de commande est configurée pour exécuter un algorithme de gestion dudit dispositif (1 ; 2 ; 3) convenant pour maximiser la durée de l'état de charge de ladite au moins une batterie (9P, 9S).

14. Dispositif (1 ; 2 ; 3) selon l'une quelconque des revendications 1 à 13, dans lequel ledit dispositif (1 ; 2 ; 3) est du type tondeuse sur coussin d'air.

15. Dispositif (1 ; 2 ; 3) selon l'une quelconque des revendications 1 à 13, dans lequel ledit dispositif (1 ; 2 ; 3) est du type tondeuse poussée.

## Revendications (Revendications pour l'(les) Etat(s) contractant(s) suivant(s): DE)

1. Dispositif (1 ; 2 ; 3) mobile pour couper de l'herbe comprenant :
- au moins une charge utile configurée pour exécuter des opérations de coupe d'herbe,
- un corps (8) configuré pour enfermer ladite charge utile,
- un guidon (28) s'étendant depuis ledit corps (8) et configuré pour permettre d'entraîner manuellement ledit dispositif (1 ; 2 ; 3) avec le pilote à pied,
- un moteur électrique accouplé à ladite charge utile et configuré pour déterminer l'activation de ladite charge utile et
- au moins une batterie (9P, 9S) électriquement connectée audit moteur électrique et configurée pour alimenter ledit moteur électrique,
dans lequel ledit guidon (28) comprend :
- un premier élément longitudinal s'étendant depuis une première région dudit corps (8),
- un second élément longitudinal s'étendant depuis une seconde région dudit corps (8),
- un élément de support (18) s'étendant entre ledit premier élément longitudinal et ledit second élément longitudinal le long d'une direction transversale aux directions le long desquelles ledit premier élément longitudinal et ledit second élément longitudinal s'étendent et
- un élément de raccordement engagé avec ledit premier élément longitudinal et avec ledit second élément longitudinal,
dans lequel ladite au moins une batterie (9P, 9S) est appliquée audit élément de support (18) et/ou supportée par ledit élément de support (18),
dans lequel ledit élément de raccordement comprend une portion de préhension (23) configurée pour être saisie aux fins d'entraîner manuellement ledit dispositif (1 ; 2 ; 3),
dans lequel ledit élément de support (18) comprend :
- une première portion latérale d'engagement (18P) avec ledit premier élément longitudinal,
- une seconde portion latérale d'engagement (18S) avec ledit second élément longitudinal et
- une portion centrale interposée entre ladite première portion latérale (18P) et ladite seconde portion latérale (18S),
dans lequel ladite première portion latérale (18P), ladite seconde portion latérale (18S) et ladite portion centrale s'étendent de manière continue,
dans lequel un compartiment (18V) configuré pour loger ladite au moins une batterie (9P, 9S) est obtenu dans ladite portion centrale,
dans lequel ladite au moins une batterie (9P, 9S) est du type rechargeable, et
dans lequel ladite au moins une batterie (9P, 9S) et ledit guidon (28) comprennent des moyens de raccordement électriques et mécaniques respectifs,
le dispositif (1 ; 2 ; 3) mobile étant **caractérisé en ce que** ladite au moins une batterie (9P, 9S) est du type amovible, et
**en ce que** la distance entre ledit élément de support (18) et ledit corps (8) est inférieure à la distance entre ladite portion de préhension (23) et ledit élément de support (18), la valeur du rapport de la distance entre ledit élément de support (18) et ledit corps (8) et la distance entre ladite portion de préhension (23) et ledit corps (8) étant d'environ 0,45 ou d'environ 0,44 ou d'environ 0,43 ou d'environ 0,42 ou d'environ 0,41 ou d'environ 0,4 ou d'environ 0,39 ou d'environ 0,38 ou d'environ 0,37 ou d'environ 0,36 ou d'environ 0,35 ou d'environ 0,34 ou d'environ 0,33 ou d'environ 0,32 ou d'environ 0,31 ou d'environ 0,3 ou d'environ 0,29 ou d'environ 0,28 ou d'environ 0,27 ou d'environ 0,26 ou d'environ 0,25 ou d'environ 0,24 ou d'environ 0,23 ou d'environ 0,22 ou d'environ 0,21 ou d'environ 0,2 ou d'environ 0,19 ou d'environ 0,18 ou d'environ 0,17 ou d'environ 0,16 ou d'environ 0,15 ou d'environ 0,14 ou d'environ 0,13 ou d'environ 0,12 ou d'environ 0,11 ou d'environ 0,1 ou d'environ 0,09 ou d'environ 0,08 ou d'environ 0,07 ou d'environ 0,06 ou d'environ 0,05.

2. Dispositif (1 ; 2 ; 3) selon la revendication 1, comprenant une pluralité de batteries, en particulier une paire de batteries (9P, 9S), dans lequel chacune desdites batteries est électriquement connectée audit moteur électrique et est appliquée audit guidon (28) et/ou supportée par ledit guidon (28).

3. Dispositif (1 ; 2 ; 3) selon la revendication 1 ou la revendication 2, dans lequel ladite première région et ladite seconde région sont des régions dudit corps (8) opposées l'une à l'autre par rapport à un plan de symétrie dudit dispositif (1 ; 2 ; 3), ledit premier élément longitudinal et ledit second élément longitudinal étant parallèles l'un par rapport à l'autre.

4. Dispositif (1 ; 2 ; 3) selon l'une quelconque des revendications 1 à 3, dans lequel ledit élément de support (18) s'étend entre ledit premier élément longitudinal et ledit second élément longitudinal le long d'une direction orthogonale aux directions le long desquelles ledit premier élément longitudinal et ledit second élément longitudinal s'étendent.

5. Dispositif (1 ; 2 ; 3) selon l'une quelconque des revendications 1 à 4, dans lequel ledit premier élément longitudinal est constitué d'une pièce unique et ledit second élément longitudinal est constitué d'une pièce unique.

6. Dispositif (1 ; 2 ; 3) selon l'une quelconque des revendications 1 à 4, dans lequel ledit premier élément longitudinal est constitué d'une pluralité de pièces assemblées ensemble et/ou ledit second élément longitudinal est constitué d'une pluralité de pièces assemblées ensemble, dans lequel au moins une première pièce et une seconde pièce de ladite pluralité de pièces sont raccordées l'une à l'autre à l'aide d'un élément connecteur (20P, 20S) configuré pour prendre :
- un état de travail, dans lequel ladite première pièce est raccordée de manière rigide à ladite seconde pièce et
- un état de transport et/ou d'ajustement, dans lequel ladite première pièce peut tourner par rapport à ladite seconde pièce ou peut effectuer une translation par rapport à ladite seconde pièce ou peut être détachée de ladite seconde pièce.

7. Dispositif (1 ; 2 ; 3) selon l'une quelconque des revendications 1 à 6, dans lequel ledit guidon (28) comprend en outre un élément formant couvercle (29) appliqué audit élément de support (18) et configuré pour déterminer une fermeture sélective dudit compartiment (18V), dans lequel ledit élément formant couvercle (29) est articulé audit élément de support (18) ou est accouplé audit élément de support (18), afin d'être capable de passer entre :
- une position de travail, dans laquelle ledit élément formant couvercle (29) délimite partiellement ledit compartiment (18V), afin de permettre en particulier à ladite au moins une batterie (9P, 9S) de demeurer enfermée entre ledit élément de support (18) et ledit élément formant couvercle (29), et
- une position de service, dans laquelle ledit élément formant couvercle (29) tourne par rapport audit élément de support (18) ou est libéré dudit élément de support (18) afin de permettre en particulier à ladite au moins une batterie (9P, 9S) d'être insérée dans ledit compartiment (18V) ou d'être retirée dudit compartiment (18V).

8. Dispositif (1 ; 2 ; 3) selon l'une quelconque des revendications 1 à 7, comprenant en outre un sac (7) pouvant être sélectivement engagé avec ledit corps (8) et configuré pour permettre à l'herbe coupée d'être collectée à l'aide de ladite charge utile, ledit sac (7) étant positionné en dessous dudit guidon (28) et comprenant une poignée (77) agencée au niveau de la paroi dudit sac (7) faisant face audit guidon (28), ladite poignée (77) étant configurée pour permettre le retrait dudit sac (7) aux fins d'évacuer l'herbe coupée ou pour une opération de coupe en mode paillage, dans laquelle ledit élément de support (18) est agencé à une distance dudit sac (7) et/ou de ladite poignée (77) telle qu'elle permet à une main ou à un bras d'accéder facilement à ladite poignée (77) aux fins de retirer ledit sac (7).

9. Dispositif (1 ; 2 ; 3) selon l'une quelconque des revendications 1 à 8, dans lequel ledit guidon (28) comprend en outre :
- au moins un commutateur ou au moins un verrou à clé configuré pour connecter et/ou pour déconnecter ladite au moins une batterie (9P, 9S) dudit moteur électrique et
- au moins une lumière ou un écran configuré·e pour rendre explicite au moins un élément d'information lié au niveau de charge de ladite au moins une batterie (9P, 9S).

10. Dispositif (1 ; 2 ; 3) selon l'une quelconque des revendications 1 à 9, comprenant en outre une unité de commande fonctionnellement connectée à ladite au moins une batterie (9P, 9S) et audit moteur électrique, dans lequel ladite unité de commande est configurée pour exécuter un algorithme de gestion dudit dispositif (1 ; 2 ; 3) convenant pour maximiser la durée de l'état de charge de ladite au moins une batterie (9P, 9S).

11. Dispositif (1 ; 2 ; 3) selon l'une quelconque des revendications 1 à 10, dans lequel ledit dispositif (1 ; 2 ; 3) est du type tondeuse sur coussin d'air.

12. Dispositif (1 ; 2 ; 3) selon l'une quelconque des revendications 1 à 10, dans lequel ledit dispositif (1 ; 2 ; 3) est du type tondeuse poussée.
